(19) Europäisches Patentamt
European Patent Office
Office européen des brevets

(11) EP 2 503 273 B1

(12) **EUROPEAN PATENT SPECIFICATION**

(45) Date of publication and mention of the grant of the patent:
**07.12.2016 Bulletin 2016/49**

(21) Application number: **10829661.7**

(22) Date of filing: **12.10.2010**

(51) Int Cl.:
***F27B 15/02*** (2006.01) ***C04B 7/44*** (2006.01)
***C04B 2/10*** (2006.01) ***B01J 8/18*** (2006.01)
***C04B 7/45*** (2006.01) ***F27B 7/20*** (2006.01)

(86) International application number:
**PCT/JP2010/006048**

(87) International publication number:
**WO 2011/058693 (19.05.2011 Gazette 2011/20)**

(54) **MIXING AND CALCINING FURNACE**

MISCH-KALZINIERUNGSOFEN

FOUR DE MÉLANGE ET CALCINATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2009 JP 2009261122**
**16.11.2009 JP 2009261123**

(43) Date of publication of application:
**26.09.2012 Bulletin 2012/39**

(60) Divisional application:
**16165524.6 / 3 081 889**

(73) Proprietor: **Mitsubishi Materials Corporation**
**Chiyoda-ku**
**Tokyo 100-8117 (JP)**

(72) Inventors:
- **SHIMA, Hirokazu**
**Naka-shi**
**Ibaraki 311-0102 (JP)**
- **HIGUCHI, Naohiro**
**Naka-shi**
**Ibaraki 311-0102 (JP)**
- **TAKAYAMA, Yoshinori**
**Naka-shi**
**Ibaraki 311-0102 (JP)**
- **KOMATSU, Takuya**
**Naka-shi**
**Ibaraki 311-0102 (JP)**
- **WANG, Junzhu**
**Naka-shi**
**Ibaraki 311-0102 (JP)**

(74) Representative: **Hoffmann Eitle**
**Patent- und Rechtsanwälte PartmbB**
**Arabellastraße 30**
**81925 München (DE)**

(56) References cited:
**WO-A1-2009/136485**
**WO-A1-2009/136485**
**JP-A- 1 127 036**
**JP-A- 55 097 239**
**JP-A- 63 060 134**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 503 273 B1

## Description

### Technical Field

The present invention relates to a mixing calciner that recovers $CO_2$ gas in a high concentration, which is generated when a to-be-calcined cement material (which is herein interpreted as a cement material before calcination) is mixed with a superheated calcined portion and calcined, or is generated mainly when a cement material is calcined in a cement-manufacturing facility.

### Background Art

In recent years, attempts to reduce carbon dioxide ($CO_2$) gas, which is the main cause of global warming, are being promoted around the world and in all industrial fields.

The cement industry, together with the electric power industry, the steel industry and the like, is one of the industries in which a large amount of $CO_2$ gas is discharged, and reduction of $CO_2$ gas discharged in the cement industry will result in largely contributing to the reduction of $CO_2$ gas discharged in the whole of Japan.

Figure 18 illustrates a general cement-manufacturing facility in the above described cement industry. Reference numeral 1 in the figure denotes a rotary kiln (cement kiln) for burning a cement material.

In addition, in a kiln inlet part 2 in a left side of this rotary kiln 1 in the figure, two sets of preheaters 3 for preheating the cement material are provided in parallel, and also a main burner 5 for heating the inner part is provided in a kiln outlet part in a right side in the figure. In addition, reference numeral 6 in the figure denotes a clinker cooler for cooling a cement clinker which has been burnt.

Here, each of the preheater 3 is constituted by a plurality of stages of cyclones which are serially arranged in a vertical direction. The cement material which has been fed to the cyclone in the uppermost stage from a feed line 4 is preheated by a high-temperature exhaust gas which is sent from the rotary kiln 1 and rises from the lower part, as the cement material falls down sequentially to the cyclones in the lower part, is extracted from the cyclone in the second stage from the bottom, is sent to a calciner 7, is heated and calcined by a burner 7a in the calciner 7, and is then introduced into the kiln inlet part 2 of the rotary kiln 1 from the cyclone in the lowermost stage through a transfer pipe 3a.

On the other hand, in the kiln inlet part 2, an exhaust gas pipe 3b is provided for feeding a combustion exhaust gas which has been discharged from the rotary kiln 1 to the cyclone in the lowermost stage. The above described exhaust gas which has been sent to the cyclone is sequentially sent to the cyclones in the upper part, preheats the above described cement material, and finally is exhausted by an exhaust fan 9 from the upper part of the cyclone in the uppermost stage through an exhaust line 8.

In the cement-manufacturing facility having such a structure, a cement clinker is manufactured by firstly pre-heating limestone ($CaCO_3$) contained as a main raw material of the cement material with the preheater 3, then calcining the limestone in the calciner 7 and the cyclone in the lowermost stage of the preheater 3, and firing the calcined limestone in the rotary kiln 1 under an atmosphere in a high temperature of approximately 1,450°C.

In this calcination process, a chemical reaction occurs which is expressed by $CaCO_3 \rightarrow CaO + CO_2 \uparrow$, and $CO_2$ gas is generated (generation of $CO_2$ gas originating in cement material). The concentration of the $CO_2$ gas originating in the cement material is theoretically 100%. In addition, $CO_2$ gas is generated also by the combustion of a fossil fuel (generation of $CO_2$ gas originating in fuel), as a result of the combustion of the fossil fuel in the main burner 5 in order to keep the atmosphere in the above described rotary kiln 1 at the above described high temperature. Here, the exhaust gas sent from the main burner 5 contains much $N_2$ gas in the air for combustion, and accordingly the concentration of $CO_2$ gas which originates in the fuel and is contained in the exhaust gas is as low as approximately 15%.

As a result, there coexist the above described $CO_2$ gas which has high concentration and originates in the cement material and the above described $CO_2$ which has low concentration and originates in the fuel, in the exhaust gas to be discharged from the above described cement kiln, and accordingly there has been a problem that though a large amount of the $CO_2$ is discharged, the concentration of the $CO_2$ is approximately 30 to 35% and the $CO_2$ gas is hard to be recovered.

On the other hand, though there are a liquid recovery method, a membrane separation method and a solid adsorption method in the methods for recovering $CO_2$ gas, which are being currently developed, any method has a problem that the recovering cost is still extremely high.

In addition, a method of separating / recovering $CO_2$ which has been discharged from a discharging source and has low concentration, increasing the concentration to approximately 100%, liquefying the $CO_2$ and then storing the liquefied $CO_2$ in the ground and the like have been proposed as methods for preventing global warming due to $CO_2$ discharged from the above described cement-manufacturing facilities, but have not been realized similarly to the above recovery methods because the cost for separating / recovering the $CO_2$ is high.

On the other hand, an apparatus for producing and recovering $CO_2$ gas has been proposed in the following Patent Document 1 as an apparatus for recovering $CO_2$ gas generated in the step of firing the limestone as $CO_2$ gas having a high utilization value and a high purity. The apparatus includes a decomposition reaction tower to which limestone is fed, a reheating tower to which quicklime (CaO) is fed as a heat medium and which also heats the quicklime to the calcination temperature of the limestone or higher with a combustion gas, and a connecting pipe which connects the decomposition reaction tower with the reheating tower.

In addition, the above described conventional recovering apparatus has such a structure as to feed the quicklime which has been heated in the reheating tower to the decomposition reaction tower through the connecting pipe to form a fluidized bed, fire the limestone thereby to produce $CO_2$ gas in the decomposition reaction tower, also discharge one part of thereby produced quicklime, send another part of the quicklime to the reheating tower through the connecting pipe again, and reheat the sent quicklime therein.

Thus, the above described apparatus for producing and recovering $CO_2$ gas can prevent $CO_2$ gas generated through the decomposition reaction of the limestone and the combustion exhaust gas generated due to heating of the heat medium from mixing with each other, by separating the decomposition reaction tower which is a place for conducting the decomposition reaction of the limestone therein from the reheating tower which is a place for generating heat quantity necessary for the decomposition reaction therein, and accordingly is considered to be capable of recovering $CO_2$ gas in high concentration from the decomposition reaction tower.

Citation List

Patent Literature

Patent Document 1

Japanese Patent laid-Open No. 57-67013

WO 2009/136485 A1 discloses a facility for recovering $CO_2$ gas generated in a cement manufacturing facility including a first preheater for preheating a cement material, and a cement kiln for manufacturing cement klinker by burning the cement material preheated by the first preheater, comprising: an extraction line for extracting the cement material before calcination from the first preheater; a mixer/calciner for allowing the cement material extracted from the extraction line and a part of the high-temperature cement clinker extracted from the cement kiln to be introduced therein and for calcining the introduced cement material; separation means for separating the cement material calcined in the mixer/calciner from the cement clinker; a return line for returning the cement material separated by the separation means to the first preheater or the cement kiln; and a $CO_2$ exhaust gas line for recovering $CO_2$ gas generated in the mixer/calciner.

(Technical Problem)

If it is intended to manufacture cement by using CaO produced in the apparatus for producing and recovering the $CO_2$ gas disclosed in the above described Patent Document 1, it is necessary to burn limestone in the above described producing and recovering apparatus, to further add another cement material such as clay which includes $SiO_2$, $Al_2O_3$ and $Fe_2O_3$ to the fired limestone, and to burn the mixture in a cement kiln. For this reason, it becomes necessary to mill the raw material in two lines independently, which causes a problem of requiring a facility with a large scale.

In addition, as is illustrated in Figure 19, the temperature of causing the calcination reaction of the limestone generally rapidly rises as the concentration of the $CO_2$ gas in the atmosphere increases, and when the concentration of the $CO_2$ gas approaches 100% (equivalent to partial pressure of 1 atm under atmospheric pressure (1 atm)), the temperature exceeds 860°C. For this reason, in order to increase the recovery rate of the $CO_2$ gas, it is necessary to heat the limestone to excessively high temperature, which causes a problem of causing a steep rise in a fuel cost.

Furthermore, the above described apparatus for producing and recovering $CO_2$ gas uses the quicklime as a superheated calcined portion and heats the limestone which is a to-be-calcined cement material, and accordingly when fluidizing or spouting the to-be-calcined cement material with $CO_2$ gas generated when both are mixed, normally results in requiring the amount of the above described quicklime which is the superheated calcined portion more than that of the above described limestone which is the to-be-calcined cement material, in order to obtain sufficient amount of recovered $CO_2$ gas. As a result, there is also a problem that when the above described limestone which is the to-be-calcined cement material is charged into the apparatus, the limestone is brought into contact with the above described quicklime which is the superheated calcined portion, the $CO_2$ gas is generated in a single burst, and a uniform fluidized bed or spouted bed cannot be formed.

In addition, such a problem also occurs in an early stage of operation as well that the fluidized bed or spouted bed resists being formed.

In addition, the apparatus for producing and recovering the $CO_2$ gas of the above described Patent Document 1 uses the quicklime as a heat medium and heats the limestone with this quicklime to calcine the limestone, and accordingly easily fluidizes the quicklime. However, the above described quicklime needs to be heated to the calcination temperature of the limestone or higher, specifically, 1,000°C or higher in a reheating tower, and accordingly a powder such as the quicklime flowing in the reheating tower tends to be easily solidified, which also causes a problem that deposition or blockage occurs in the connecting pipes and the like and the apparatus becomes inoperable.

On the other hand, when the heat medium having a particle diameter larger than that of the cement material is used, though the deposition, the blockage or the like does not occur in the connecting pipes or the like, the limestone resists being fluidized, the heat medium results in needing a period of time for the radiation of heat, and there is also a problem that it is difficult to efficiently conduct mixing calcination. Furthermore, in order to fluidize the cement material in gaps among the heat media, the cross-sectional area of the furnace needs to be increased so as to reduce a wind velocity in the cylinder. However, even though the cross-sectional area of the furnace is increased and the wind velocity in the cylinder is reduced, when the above described cement material is charged from one portion in the upper part, the above described cement material is not sufficiently dispersed, and results in generating $CO_2$ gas in a single burst when having been brought into contact with the heat medium, which causes also a problem that a uniform fluidized bed cannot be formed and calcination efficiency may be lowered.

In addition, when the apparatus charges the heat medium having a particle diameter larger than that of the cement material from the upper part of a decomposition reaction tower, extracts the cement material from the lower part to thereby form a moving bed, spouts the cement material with $CO_2$ gas generated in the gaps among the heat media, and recovers the $CO_2$ gas and the above described cement material which has been calcined, the $CO_2$ gas is generated when the above described cement material is charged from the upper part, and results in being discharged from the upper part before being fed to the above described moving bed. As a result, there is also a problem that the amount of the generated $CO_2$ gas is not stabilized.

Summary of Invention

The present invention has been made in view of such circumstances, and an object is to provide a mixing calciner that can separate and recover $CO_2$ gas in a high concentration, which is generated when a to-be-calcined cement material is mixed with a superheated calcined portion and calcined, by employing a fluidized-bed type or a spouted-bed type.

(Solution to Problem)

In order to solve the above described problems, the present invention provides a mixing calciner which mixes a to-be-calcined cement material with a superheated calcined portion to cause a calcination reaction, wherein the mixing calciner is a fluidized-bed type or a spouted-bed type, and is provided with a plurality of feed lines for feeding the to-be-calcined cement material and further provided with a fluidizing or spouting means in the bottom part for feeding air, in an early stage of operation, into the mixing calciner, wherein the feed lines are connected to different portions in a height direction of the mixing calciner.

(Effects of the present invention)

The mixing calciner of the present invention feeds a to-be-calcined cement material through a plurality of feed lines and mixes the to-be-calcined cement material with a superheated calcined portion. Thus, in the above described fluidized-bed type or the above described spouted-bed type mixing calciner, places in which the to-be-calcined cement material is calcined by the above described superheated calcined portion are dispersed, and the generated $CO_2$ gas provides more uniform fluidization or spouting.

As a result, the inner part of the above described mixing calciner is filled with the $CO_2$ gas generated by the calcination of the to-be-calcined cement material, and the concentration of the $CO_2$ gas becomes approximately 100%. Thus, the above described mixing calciner can recover the $CO_2$ gas which is discharged from the above described mixing calciner and has the concentration of approximately 100%, from the $CO_2$ gas exhaust pipe.

In the present invention, the mixing calciner is provided with fluidizing or spouting means that feeds air to the above described fluidized-bed type or the above described spouted-bed type in an early stage of operation, thereby fluidizes or spouts the cement material to generate $CO_2$ gas, spontaneously fluidizes or spouts the cement material by the generated $CO_2$ gas, and then stops the feeding of the above described air. Accordingly, the mixing calciner can stably generate the $CO_2$ gas from the early stage of the operation. As a result, the mixing calciner can reduce a calcination loss as much as possible, and can efficiently recover the high-concentration $CO_2$ gas.

Furthermore, as in the mixing calciner according to the present invention, when the above described superheated calcined portion has the same particle diameter as that of the to-be-calcined cement material, the above described fluidized-bed type or spouted-bed type of the above described mixing calciner conducts an action of the fluidization or spouting smoothly. As a result, $CO_2$ which is generated during the calcination and originates in the raw material can be selectively recovered in a high concentration.

Particularly, when the mixing calciner according to the the present invention uses a cement material before calcination as the above described to-be-calcined cement material, the inner part of the above described mixing calciner becomes an atmosphere containing such a high concentration as nearly 100% of $CO_2$ gas, and accordingly the calcination temperature of the to-be-calcined cement material becomes high. However, the cement material contains clay, silica stone and a raw material of iron oxide, in other words, $SiO_2$, $Al_2O_3$ and $Fe_2O_3$ together with the limestone ($CaCO_3$).

Then, the above described cement material causes the reactions expressed by the following formulae in an atmosphere at approximately 800 to 900°C.

$$2CaCO_3 + SiO_2 \rightarrow 2CaO \cdot SiO_2 + 2CO_2 \uparrow \qquad (1)$$

$$2CaCO_3 + Fe_2O_3 \rightarrow 2CaO \cdot Fe_2O_3 + 2CO_2 \uparrow \qquad (2)$$

$$GaCO_3 + Al_2O_3 \rightarrow CaO \cdot Al_2O_3 + CO_2 \uparrow \qquad (3)$$

The components are eventually converted to alite ($3CaO \cdot SiO_2$) and belite ($2CaO \cdot SiO_2$) which are calcium silicate compounds constituting the cement clinker, and an aluminate phase ($3CaO \cdot Al_2O_3$) and a ferrite phase ($4CaO \cdot Al_2O_3 \cdot Fe_2O_3$) which are interstitial phases.

At this time, the above described reactions can be caused at lower temperatures even when the partial pressure of the $CO_2$ gas illustrated in a vertical axis becomes high, as is viewed in a graph of a reaction temperature of the above described formula (1) shown in Figure 5, a graph of a reaction temperature of the above described formula (2) shown in Figure 6 and a graph of a reaction temperature of the above described formula (3) shown in Figure 7.

Furthermore, in the above described cement material, $SiO_2$, $Al_2O_3$, $Fe_2O_3$ and other trace components, which are brought from other raw materials than the limestone such as the silica stone and the clay, not only cause the reactions expressed by the above described formulae (1) to (3), but also function as a mineralizer, and promote thermal decomposition of calcium carbonate. Accordingly, both a start temperature and an end temperature of the thermal decomposition reaction are lowered in comparison with the case when calcium carbonate is solely calcined, as is illustrated in Figure 8. Incidentally, Figure 8 illustrates a result of having confirmed the transition of the above described thermal decomposition reaction from a change of weight obtained when a sample of the above described cement material (raw material) and a sample of the above described single limestone ($CaCO_3$) are heated respectively at a heating rate of 10 K/sec which is close to the heating rate in a general cement-manufacturing facility.

Here, the followings are considered as one of reasons why both the start temperature and the end temperature of the thermal decomposition reaction are lowered by the presence of the above described mineralizer, in comparison with the case in which the single calcium carbonate is calcined.

Specifically, when activity is represented by a and an equilibrium constant in a reaction formula of $CaCO_3 \rightarrow CaO + CO_2$ is represented by K,

in the formula of $P_{CO2} = (a_{CaCO3}/a_{CaO}) \times K$

the value of $a_{CaO}$ becomes less than 1, because an activity a of a solid is generally 1 regardless of the type of the solid as long as the solid is a pure substance, but in the case of calcium oxide (CaO), other source materials (in other words, the above described mineralizer) dissolve into CaO formed after the calcium carbonate ($CaCO_3$) has been thermally decomposed. It is considered that as a result, $P_{CO2}$ in the above formula becomes high, the temperature at which the $P_{CO2}$ becomes 1 atm is lowered, and the calcination is further promoted. Accordingly, even when an operation temperature in the mixing calciner is lowered, a desired recovery amount of $CO_2$ gas can be secured. For information, the $a_{CaCO3}$ is a value inherent to the type and producing district of the limestone, and is not affected by the other components in the raw material.

Brief Description of Drawings

Figure 1 is a schematic block diagram illustrating one embodiment in which a mixing calciner according to the present invention is used for a cement-manufacturing facility.

Figure 2 is an explanatory drawing for describing a mixing calciner.

Figure 3 is an explanatory drawing for describing a mixing calciner according to the present invention.

Figure 4 is a schematic block diagram illustrating a modified example of the one embodiment in which the mixing calciner according to the present invention is used for the cement-manufacturing facility.

Figure 5 is a graph illustrating a relationship between the concentration of $CO_2$ in an atmosphere and a reaction temperature expressed by formula (1).

Figure 6 is a graph illustrating a relationship between the concentration of $CO_2$ in an atmosphere and a reaction temperature expressed by formula (2).

Figure 7 is a graph illustrating a relationship between the concentration of $CO_2$ in an atmosphere and a reaction temperature expressed by formula (3).

Figure 8 is a graph illustrating a difference of start temperatures and end temperatures of a calcination reaction between the case in which the cement material is calcined and the case in which limestone is solely calcined in $CO_2$ atmosphere.

Figure 9 is a schematic block diagram illustrating one embodiment of systems for recovering $CO_2$ gas in cement-manufacturing facilities.

Figure 10 is an explanatory drawing for describing one embodiment of mixing calciners to be used in systems for recovering $CO_2$ gas in cement-manufacturing facilities.

Figure 11 is an explanatory drawing for describing a mixing calciner having a plurality of charging lines for charging a cement material connected to the mixing calciner of Figure 10.

Figure 12 is an explanatory drawing for describing another embodiment of mixing calciners to be used in systems for recovering $CO_2$ gas in cement-manufacturing facilities.

Figure 13 is an explanatory drawing for describing a mixing calciner having a plurality of charging lines for charging the cement material connected to the mixing calciner of Figure 12.

Figure 14 is a graph illustrating a relationship between the concentration of $CO_2$ in an atmosphere and a reaction temperature expressed by formula (1).

Figure 15 is a graph illustrating a relationship between the concentration of $CO_2$ in an atmosphere and a reaction temperature expressed by formula (2).

Figure 16 is a graph illustrating a relationship between the concentration of $CO_2$ in an atmosphere and a reaction temperature expressed by formula (3).

Figure 17 is a graph illustrating a difference of start temperatures and end temperatures of a calcination reaction between the case in which the cement material is calcined and the case in which limestone is solely calcined, the both cases being in $CO_2$ atmosphere.

Figure 18 is a schematic block diagram illustrating a general cement-manufacturing facility.

Figure 19 is a graph illustrating a relationship between the concentration of $CO_2$ in an atmosphere and the calcination temperature of limestone.

## Description of Embodiments

### (First embodiment)

Figure 1 illustrates one embodiment in which a mixing calciner according to the present invention is used in systems for recovering $CO_2$ gas in cement-manufacturing facilities, and the one embodiment has the same structure concerning the cement-manufacturing facility as that in Figure 18. Accordingly, the same portions are denoted by the same reference numerals, and the description thereof will be simplified.

In Figure 1, reference numeral 10 denotes a second preheater 10 which is independently provided from a preheater (first preheater) 3 in the cement manufacturing facility.

This second preheater 10 is constituted by a plurality of stages of cyclones which are serially arranged in a vertical direction similarly to those in the above described first preheater 3, and is constituted so that a to-be-calcined cement material (that is, cement material before calcination) is fed to the cyclone in the uppermost stage from a feed line 11. The upper end of a transfer pipe 10a is connected to the bottom part of the cyclone in the lowermost stage of the second preheater 10, and the lower end of this transfer pipe 10a is introduced to a mixing calciner 12.

On the other hand, the above described first preheater 3 of the above described cement-manufacturing facility has an extraction line 13 for extracting the above described cement material before calcination from the cyclone in the lowermost stage, and the head part of this extraction line 13 is connected to the transfer pipe 10a which is connected to the second preheater 10. Thus, the cement material before calcination sent from the second preheater 10 and the cement material before calcination sent from the first preheater 3 are introduced into the mixing calciner 12. In addition, a transfer pipe 3a for feeding one part of the above described cement material before calcination to the kiln inlet part 2 of a rotary kiln 1 through a not-shown distributing valve for adjusting the calcination rate is connected in a middle portion of the extraction line 13, in a similar way to that in a conventional facility.

The mixing calciner 12 is a powder-mixing furnace of a fluidized-bed type or a spouted-bed type as is illustrated in Figure 2, and feed lines 25 for feeding the above described cement material before calcination from the transfer pipe 10a are connected to a plurality of portions. These feed lines 25 are connected to the different positions in a height direction of the mixing calciner 12. As is illustrated in Figure 3, fluidizing or spouting means 12b for feeding air into the mixing calciner is provided in the bottom part. This fluidizing or spouting means 12b uses a nozzle or an air diffuser plate.

Furthermore, a discharge pipe 12a for extracting the mixed cement material is connected to the vicinity of the center in the side face part of the mixing calciner 12. This discharge pipe 12a is arranged so as to branch off. One pipe is named as a superheating line 14 and is connected to a superheating furnace 15, and the other one is named as a return line 16 and is connected to the kiln inlet part 2 of the rotary kiln 1. Here, a not-shown distributing valve is placed in a branching part among the discharge pipe 12a, the superheating line 14 and the return line 16, and in the present embodiment, the flow rate to the superheating line 14 is set so as to be larger than that to the return line 16 (for instance, so that flow ratio becomes 4:1).

In addition, in the modified example of the above described one embodiment illustrated in Figure 4, the above described return line 16 is not provided, and only a return line 26 is provided for returning one part of the cement material after calcination, which has been discharged from the superheating furnace 15 and separated by a cyclone 19, to the rotary kiln 1.

The above described superheating furnace 15 is a furnace for superheating the calcined substance (cement material which has been calcined) to be sent to the inner part to the calcination temperature or higher, by the combustion in a burner 17 which uses a bleed air sent from the clinker cooler 6 as air for combustion. It is also possible to use a modified one of an existing calciner as this superheating furnace 15. In the discharge side of this superheating furnace 15, there is provided a circulation line formed of: an exhaust pipe 18 for discharging an exhaust gas generated by the combustion in the burner 17 and the above described cement material which has been calcined; a cyclone 19 to which this exhaust pipe 18 is connected and which separates the cement material that has been calcined from the exhaust gas; and a return pipe 20 for returning the cement material which has been calcined and has been separated in this cyclone 19, to the mixing calciner 12 again.

On the other hand, an exhaust gas pipe 21 for discharging the exhaust gas which has been separated in the cyclone 19 is connected to an exhaust gas pipe 3b which is connected to the rotary kiln 1. Incidentally, the inner part of the above described superheating furnace 15 needs to be held at a high temperature of approximately 1,100°C. On the other hand, the exhaust gas from the rotary kiln 1 has a temperature of 1,100 to 1,200°C, and accordingly the above described exhaust gas can be effectively used, by introducing the total amount or the fixed amount of the exhaust gas from the rotary kiln 1 into the superheating furnace 15 and sending the exhaust gas to the first preheater 3 from the exhaust gas pipe 21 again.

Furthermore, the $CO_2$ gas exhaust pipe 22 for discharging the $CO_2$ gas produced in the inner part is connected to the mixing calciner 12, and this $CO_2$ gas exhaust pipe 22 is also introduced to the second preheater 10 as a heating medium of the second preheater 10. Reference numeral 23 in the figure denotes an exhaust fan of $CO_2$ gas, and reference numeral 24 denotes an exhaust line of $CO_2$ gas.

Incidentally, in order to promote the fluidization and spouting, the $CO_2$ gas which has been discharged from the mixing calciner 12 can also be used in a circulation way of being extracted from the $CO_2$ exhaust pipe 22 or the exhaust line 24 and being fed to the mixing calciner 12 again.

Next, a method for recovering $CO_2$ gas using the mixing calciner 12 according to the present invention in the system for recovering the $CO_2$ gas in the cement-manufacturing facility shown in the above described one embodiment will be described below.

Firstly, a cement material before calcination is fed to the cyclones in the uppermost stages of the first preheater 3 and the second preheater 10 from the feed lines 4 and 11, respectively.

Then, in the first preheater 3, the above described cement material before calcination is preheated by the exhaust gas which is fed from the rotary kiln 1 through the exhaust gas pipe 3b in a similar way to that in a conventional facility and by the combustion exhaust gas sent from the superheating furnace 15, in the process of being sequentially sent to the cyclones in the lower part. Then, the above described cement material before calcination, which has been preheated up to a temperature (for instance, approximately 810°C) just below the calcination temperature, is fed to the mixing calciner 12 from the extraction line 13 through the transfer pipe 10a.

In addition, the calcined cement material before calcination, which has been fed to the second preheater 10, is preheated by a high-temperature $CO_2$ gas which has been discharged when the cement material before calcination has been calcined in the mixing calciner 12, is finally preheated up to a temperature (for instance, approximately 760°C) just below the calcination temperature, and is fed to the mixing calciner 12 from the transfer pipe 10a.

On the other hand, in the superheating furnace 15, the above described cement material which has been calcined in the inner part is heated to the calcination temperature of the cement material or higher (for instance, approximately 1,200°C) by the combustion in the burner 17. Then, the calcined and superheated cement material by being heated is entrained by an exhaust gas generated by the combustion in the burner 17, and is sent to the exhaust pipe 18 which is connected to the discharge side of the superheating furnace 15. Then, the calcined and superheated cement material in the exhaust gas is separated by the cyclone 19 which is connected to this exhaust pipe 18, and is fed to the mixing calciner 12 from a circulation line including the return pipe 20 again.

Thus, as is illustrated in Figure 2 and Figure 3, in the mixing calciner 12, the above described cement material before calcination to be fed from the plurality of the feed lines 25 is mixed with the calcined and superheated cement material, is heated to the calcination temperature or higher (for instance, approximately 900°C), and is calcined. At this time, $CO_2$ gas is also generated. In the early stage of the operation, the fluidizing or spouting means 12b provided in the bottom part of the mixing calciner is operated, air is fed to the mixing calciner from the outside, and the cement material in the inner part of the furnace is fluidized or spouted. Then, after the cement material has been spontaneously fluidized or spouted by the generated $CO_2$ gas, the fluidizing or spouting means 12b is stopped.

In order to spontaneously fluidize or spout the cement material, a combustion exhaust gas of the cement kiln 1, the superheating furnace 15 or the like may be also used other than the high-temperature air, as needed.

When the cement material before calcination is calcined by being mixed with the above described calcined and superheated cement material, the $CO_2$ gas concentration in the atmosphere becomes approximately 100% due to the generated $CO_2$ gas. Because of this, unless all calcination is completed, the calcination temperature becomes approximately constant at about 900°C.

In addition, in the mixing calciner 12, if the expression of the fluidizing speed $U_{mf}$ of powder < wind velocity in the cylinder of mixing calciner < terminal velocity $U_t$ of powder is valid, the powder is fluidized in the mixing calciner, and the cement material which has been calcined is sent to the discharge pipe 12a from the fluidized bed by overflow.

On the other hand, in the mixing calciner 12, if the expression of terminal velocity $U_t$ of powder < wind velocity in the cylinder of mixing calciner is valid, the fluidized bed vividly fluidizes or spouts the cement material, and the cement material which has been calcined is entrained by the generated $CO_2$ gas. Because of this, the mixing calciner separately provides separating means for the powder such as the cyclone to recover the above described cement material which has been calcined.

Here, the flow rate of the $CO_2$ gas generated in the calcination reaction can be calculated on the basis of the assumption that the heat quantity obtained by deducting a heat quantity necessary for raising the temperature of the cement material before calcination to the calcination temperature from a heat quantity to be emitted when the temperature of the above described calcined and superheated cement material is lowered to the calcination temperature by being mixed with the cement material before calcination is supplied to the calcination of the cement material before calcination, and the wind velocity in the cylinder can be obtained by dividing this flow rate of the $CO_2$ gas by the cross-section area of the mixing calciner 12.

In addition, the $U_{mf}$ that is the fluidizing speed at which the powder starts fluidization and the terminal speed $U_t$ at which the powder is entrained by the generated $CO_2$ gas are obtained by the following formulae.

$$U_{mf} = \frac{u}{d_p \rho_f} \mathrm{Re}_{mf}$$

$$\mathrm{Re}_{mf} = \frac{\sqrt{b^2 + 4aAr} - b}{2a}$$

$$Ar = \frac{d_p^3 \rho_f (\rho_p - \rho_f) g}{u^3}$$

$$a = \frac{1.75}{\phi_s \varepsilon_{mf}^3}, b = \frac{150(1 - \varepsilon_{mf})}{\phi_s^2 \varepsilon_{mf}^3}$$

$$U_t = \left\{ \frac{4g^2(\rho_p - \rho_f)^2}{225 \rho_f u} \right\}^{\frac{1}{3}} d_p$$

$\mu$: Viscosity of fluid (Pa-s)
$d_p$: Average particle diameter of powder (m)
$\rho_f$: Density of fluid (kg/m$^3$)

$Re_{mf}$: Reynolds number of powder in fluidized bed
Ar: Archimedes number
$\rho_p$: Density of powder (kg/m$^3$)
g: Gravitational acceleration (m/s$^2$)
$\phi_s$: Shape factor (1 in the case of genuine sphere)
$\varepsilon_{mf}$: Gap ratio in fluidized bed

Thus, the above described mixing calciner 12 in the cement-manufacturing facility effectively uses a heat source in the cement-manufacturing facility, and can recover $CO_2$ gas generated in the mixing calciner 12 in a high concentration of nearly 100%.

At this time, in the mixing calciner 12, the fluidized bed or the spouted bed can be stably formed by charging the above described cement material before calcination from a plurality of portions and charging the calcined and superheated cement material having the same particle diameter as that of the cement material before calcination as a heat medium. Accordingly, the $CO_2$ gas is stably generated and the $CO_2$ gas in high concentration can be recovered. Furthermore, the fluidizing or spouting means can stably generate the $CO_2$ gas from the early stage of the operation.

In addition, the mixing calciner 12 returns the high-temperature cement material which has been sufficiently calcined therein to the rotary kiln 1 from the return line 16, and as is illustrated in the modified example of Figure 4, returns one part of the cement material after calcination, which has been discharged from the superheating furnace 15 and has been separated by the cyclone 19, to the rotary kiln 1 from the return line 26, and accordingly can reduce a fuel necessary for burning the cement material. As a result, the cement manufacturing facility can use a rotary kiln 1 which has a shorter longitudinal dimension than that of a conventional one.

In the above described one embodiment, only an example in which the mixing calciner 12 is used for the cement-manufacturing facility was described, but the mixing calciner is not limited to this example. The mixing calciner can also be used for other facilities.

In addition, only an example has been described in which the feed lines 25 for feeding the cement material from the transfer pipe 10a are connected to different positions in the height direction of the mixing calciner 12, but the mixing calciner is not limited to this example. For instance, the feed lines can be connected to a plurality of different positions at the same height of the mixing calciner 12, or further also can be connected to a plurality of different positions in the height direction and also to a plurality of different positions at the same height of the mixing calciner 12.

(Second embodiment) (Reference)

Figure 9 illustrates one embodiment of systems for recovering $CO_2$ gas n in cement-manufacturing facilities according to the present invention, and the one embodiment has the same structure concerning the cement-manufacturing facility as that in Figure 18. Accordingly, the same portions are denoted by the same reference numerals, and the description thereof will be simplified.

In Figure 9, reference numeral 110 denotes a second preheater 110 which is provided independently from the preheater (first preheater) 3 in the cement manufacturing facility.

The second preheater 110 is constituted by a plurality of stages of cyclones which are serially arranged in a vertical direction similarly to those in the above described first preheater 3, and is constituted so that a cement material before calcination (that is, uncalcined cement material), designated by k, is fed to the cyclone in the uppermost stage from a feed line 111. In addition, the upper end of a transfer pipe 110a is connected to the bottom part of the cyclone in the lowermost stage of the second preheater 110, and the lower end of this transfer pipe 110a is introduced to a mixing calciner 112.

On the other hand, the above described first preheater 3 of the cement-manufacturing facility has an extraction line 113 for extracting the cement material before calcination k from the cyclone in the lowermost stage, and the head part of this extraction line 113 is connected to the transfer pipe 110a which is connected to the second preheater 110. Thus, the cement material before calcination k sent from the second preheater 110 and the cement material before calcination k sent from the first preheater 3 are introduced into the mixing calciner 112.

Furthermore, the mixing calciner 112 is a fluidized-bed type powder-mixing furnace, as is illustrated in Figures 10 and 11, and has a feed line 120 for feeding a heat medium t from the upper part and a discharge line 125 for extracting the heat medium t from the lower part connected thereto. This discharge line 125 becomes a circulation line 114 of the heat medium through a bucket elevator 119, and is connected to a medium-heating furnace 115. In addition, a charge line 129 for feeding the cement material before calcination k from the transfer pipe 110a is connected to the upper part of the mixing calciner 112. Furthermore, in a modified example of Figure 10, as is illustrated in Figure 11, the charge lines 129 are connected to a plurality of portions (in the figure, two portions) in the upper part of the mixing calciner 112. In addition, the charge portion of the cement material before calcination k may also be provided in one portion or a plurality of portions in the side face part between the feed line 120 of the heat medium t and the discharge line 125 of the heat medium t, in order that the cement material before calcination k is not discharged from the overflow before being calcined.

In addition, a recovery line 112a for extracting the cement material which has been calcined (cement material after calcination) k' is connected to the vicinity of the center of the side face part of the mixing calciner 112. This recovery line 112a is named as a return line 116, and is connected to the kiln inlet part 2 of the rotary kiln 1. In addition, the cement material k' after calcination to be discharged from the discharge line 125 of the heat medium t simultaneously with the heat medium t may also be introduced to the return line 116, after having been separated from the heat medium t by separating means such as a gravity sedimentation device. The mixing calciner 112 has the $CO_2$ exhaust pipe 122 for discharging the $CO_2$ gas n produced in the inner part connected thereto, and this $CO_2$ gas is also introduced as a heating medium in the second preheater 110.

Furthermore, the mixing calciner 112 in another embodiment is a spouted-bed type powder-mixing furnace, as is illustrated in Figure 12 or Figure 13, and has a feed line 120 for feeding a heat medium t from the upper part and a discharge line 125 for extracting the heat medium t from the lower part connected thereto. This discharge line 125 becomes a circulation line 114 of the heat medium through a bucket elevator 119, and is connected to a medium-heating furnace 115. In addition, a charge line 129 for feeding the cement material before calcination k therethrough from a transfer pipe 110a is connected between the feed line 120 for feeding the heat medium t and the discharge line 125 for extracting the heat medium t from the lower part. This charge line 129 is connected to a position between 0.5 and 0.9 downwardly from the feed line 120, when a distance between the feed line 120 and the discharge line 125 is determined to be 1.

Furthermore, in a modified example of Figure 12, as is illustrated in Figure 13, the charge lines 129 of the cement material before calcination k are connected to a plurality of portions between the feed line 120 and the discharge line 125, and are connected to a plurality of portions between 0.1 and 0.9 downwardly from the feed line 120, when the distance between the feed line 120 and the discharge line 125 is determined to be 1.

The mixing calciner 112 in another embodiment has a recovery line 127 for recovering the cement material k' after calcination entrained by the $CO_2$ gas n produced in the inner part connected thereto. In addition, this recovery line 127 is provided with separating means 128 for separating the cement material k' after calcination from the $CO_2$ gas n. A cyclone is used as this separating means 128. In addition, the separating means 128 has the $CO_2$ gas exhaust pipe 122 for discharging the $CO_2$ gas n connected thereto. This $CO_2$ gas exhaust pipe 122 is also introduced as a heating medium of the second preheater 110. Furthermore, the separating means has a return line 116 for returning the cement material k' after calcination to the kiln inlet part 2 of the cement kiln 1 connected thereto.

Furthermore, the medium-heating furnace 115 is a furnace for heating the heat medium t, which has a particle diameter larger than that of the cement material before calcination k and which is to be sent to the inner part of the medium-heating furnace 115, to the calcination temperature or higher by the combustion in the burner 117 which uses a bleed air sent from the clinker cooler 6 as air for combustion. It is also possible to use a modified one of an existing calciner as this medium-heating furnace 115. In addition, an exhaust pipe 118 for exhausting an exhaust gas generated by the combustion in the burner 117 is connected to the discharge side of this medium-heating furnace 115. This exhaust pipe 118 is connected to an exhaust gas pipe 3b of the cement kiln 1. In addition, a feed line 120 for feeding the heat medium t to the upper part of the mixing calciner 112 is connected to the lower part of the medium-heating furnace 115.

In addition, the inner part of the above described medium-heating furnace 115 needs to be held at a high temperature of approximately 1,100°C. On the other hand, the exhaust gas from the rotary kiln 1 has a temperature of 1,100 to 1,200 °C, and accordingly, the above described exhaust gas can be effectively used, by introducing the total amount or the fixed amount of the exhaust gas from the rotary kiln 1 into the medium-heating furnace 115 and sending the exhaust gas to the first preheater 3 from the exhaust gas pipe 118 again.

Reference numeral 124 in the figure denotes an exhaust fan of $CO_2$ gas, and reference numeral 123 denotes an exhaust line of $CO_2$ gas. In addition, reference numeral 121 denotes a heat medium tank for compensating the heat medium t which has been worn out while being circulated.

Incidentally, when the fluidized-bed type is used for the mixing calciner 112, the $CO_2$ gas n which has been discharged from the mixing calciner 112 can also be used in a circulation way of being extracted from the $CO_2$ gas exhaust pipe 122 or the exhaust line 124 and being fed to the mixing calciner 112 again.

Next, a method for recovering $CO_2$ gas n using the mixing calciner 112 in the system for recovering the $CO_2$ gas n in the cement-manufacturing facility shown in the above described one embodiment will be described below.

Firstly, the cement material before calcination k is fed to the cyclones in the uppermost stages of the first preheater 3 and the second preheater 110 from the feed lines 4 and 111, respectively.

Then, the cement material before calcination k is preheated by the exhaust gas which is fed from the rotary kiln 1 through the exhaust gas pipe 3b, in the process of being sequentially sent to the cyclones in the lower part in the first preheater 3, in a similar way to that in a conventional facility. Then, the cement material before calcination k, which has been preheated up to a temperature (for instance, approximately 810°C) just below the calcination temperature, is fed to the mixing calciner 112 from the extraction line 113 through the transfer pipe 110a.

The cement material k which has been fed to the second preheater 110 is preheated by a high-concentration and high-temperature $CO_2$ gas n which has been discharged from the mixing calciner 112, is finally preheated up to a temperature (for instance, approximately 760°C) just below the calcination temperature, and is fed to the mixing calciner 112 from the transfer pipe 110a.

On the other hand, in the medium-heating furnace 115, the heat medium t in the inner part is heated to the calcination temperature of the cement material or higher (for instance, approximately 1,200°C) by the combustion in the burner 117. The exhaust gas which has been generated at this time is sent to the exhaust pipe 118, and is sent to the first preheater 3 from the exhaust pipe 3b of the cement kiln 1 together with the exhaust gas. In addition, the heat medium t which has been heated to the calcination temperature of the cement material or higher is fed to the mixing calciner 112 from the feed line 120 which is connected to the lower part of the medium-heating furnace 115.

Thus, as is illustrated in Figures 10 and 11, in the mixing calciner 112, a moving bed 126 is formed by the feed of the heat medium t from the feed line 120 which is connected to the upper part and the extraction of this heat medium t from the discharge line 125 in the lower part, and at the same time, the cement material before calcination k is charged from the charge line 129 in the upper part. Then, the cement material is heated in gaps among the heat media t which form the moving bed 126 to the calcination temperature or higher (for instance, approximately 900°C) and is calcined.

Then, the cement material k' after calcination, which has been calcined, floats to form a fluidized bed along with the rise of the $CO_2$ gas n generated during the calcination in the gaps among the heat media t which form the moving bed 126, is also recovered from the recovery line 112a by overflow, and is sent to the kiln inlet part 2 of the cement kiln 1 from the return line 116. In addition, the high-concentration and high-temperature $CO_2$ gas n is introduced as a heating medium in the second preheater 110 from the $CO_2$ gas exhaust pipe 122 which is connected to the upper part of the mixing calciner 112.

At this time, the lowering of calcination efficiency can be prevented even in the mixing calciner 112 having the increased cross-sectional area so as to reduce a wind velocity in the cylinder, by connecting charge lines 129 to a plurality of portions and charging the cement material before calcination k into the mixing calciner 112, as in the mixing calciner 112 illustrated in Figure 11, which is a modified example of the mixing calciner 112 of Figure 10, because the cement material before calcination k is dispersed, and a heat transfer from the heat medium t is promoted.

Furthermore, in Figures 12 and 13 which are other embodiments of the mixing calciner 112, the mixing calciner feeds the heat medium t from the feed line 120 which is connected to the upper part in the side face side of the mixing calciner 112 and extracts the heat medium t from the discharge line 125 in the lower part to form a moving bed 126, and charges the cement material before calcination k from the charge line 129 which is connected between the feed line 120 and the discharge line 125. Then, the cement material k is heated in the gaps among the heat media t which form the moving bed 126 to the calcination temperature or higher (for instance, approximately 900°C) and is calcined, and the cement material k' after calcination is entrained by the $CO_2$ gas n which has been generated at this time. Thus, a spouted bed is formed.

The cement material k' after calcination is sent to the separating means 128 from the recovery line 127 together with the $CO_2$ gas n, and is separated into the $CO_2$ gas n and the cement material k' after calcination by the cyclone. The separated $CO_2$ gas n is introduced to the second preheater 110 from the $CO_2$ gas exhaust pipe 122, as a heating medium. In addition, the separated cement material k' after calcination is sent to the return line 116 from the recovery line 112a, and is fed to the kiln inlet part 2 of the cement kiln 1.

At this time, by connecting the charge lines 129 of the mixing calciner 112 to a plurality of portions between the feed line 120 and the discharge line 125, a space in the furnace is sufficiently used, and the cement material is calcined in the gaps among the heat media t. Accordingly, the $CO_2$ gas n is stably generated. This $CO_2$ gas n spouts the calcined cement material k'. In the mixing calciner 112 illustrated in Figure 13 which is a modified example of the mixing calciner 112 of Figure 12, the charge lines 129 are connected to a plurality of portions between 0.1 and 0.9 downwardly from the feed line, when a distance between the feed line 120 and the discharge line 125 of the heat medium t is determined to be 1, and the cement material before calcination k is charged from the charge lines 129 provided in the plurality of the portions. Thereby, the cement material can be sufficiently calcined by receiving radiant heat from the heat medium t in the gaps among the heat media t, and the high-concentration $CO_2$ gas n results in being stably generated.

Thus, the cement material before calcination k is calcined in the gaps among the heat media t, and the high-concentration $CO_2$ gas n is generated. In the moving bed 126 in which this $CO_2$ gas n floats, the cement material k' after calcination is entrained and spouted by the $CO_2$ gas having sufficient wind velocity in the cylinder. Then, the cement material k' after calcination entrained by the $CO_2$ gas n is sent to the separating means 128 from the recovery line 127 in the upper part by the spouting. The high-concentration $CO_2$ gas n and the cement material k' after calcination are separated by the cyclone of this separating means 128.

Furthermore, the cement material k' after calcination, which has been separated by the cyclone of the separating means 128, is sent to the kiln inlet part 2 of the cement kiln 1 from the return line 116. In addition, the high-concentration and high-temperature $CO_2$ gas n is introduced to the second preheater 110 as a heating medium, from the $CO_2$ gas exhaust pipe 122 which is connected to the upper part of the separating means 128.

When the cement material before calcination k is mixed with the heat medium t and is calcined, the $CO_2$ concentration in an atmosphere becomes approximately 100% due to the generated $CO_2$ gas n. Because of this, unless all calcination is completed, the calcination temperature becomes approximately constant at about 900°C.

In addition, in the mixing calciner 112, if the expression of fluidizing speed $U_{mf}$ of powder < wind velocity in the cylinder of mixing calciner < terminal velocity $U_t$ of powder is valid, the cement material k' after calcination is fluidized in the mixing calciner, and the cement material k' after calcination is sent by the overflow to the discharge pipe 112a from the fluidized bed.

On the other hand, in the mixing calciner 112, if the expression of terminal velocity $U_t$ of powder < wind velocity in the cylinder of mixing calciner is valid, the cement material k' after calcination is vividly fluidized or spouted in the mixing calciner, and the cement material k' after calcination is entrained by the generated $CO_2$ gas n. Because of this, the mixing calciner separately provides separating means for the powder such as the cyclone to recover the above described cement material which has been calcined.

Here, the flow rate of the $CO_2$ gas n generated in the calcination reaction can be calculated on the basis of the assumption that the heat quantity obtained by deducting a heat quantity necessary for raising the temperature of the cement material before calcination k to the calcination temperature from the heat quantity to be emitted when the temperature of the heat medium t is lowered to the calcination temperature by being mixed with the cement material before calcination k is supplied to the calcination of the cement material before calcination k, and the above described wind velocity in the cylinder can be obtained by dividing this flow rate of the $CO_2$ gas n by the cross-section area of the mixing calciner 112 and the gap ratio of the heat medium.

In addition, the $U_{mf}$ that is the fluidizing speed at which the powder starts fluidization and the terminal speed $U_t$ at which the powder is entrained by the generated $CO_2$ gas n are obtained by the following formulae.

$$U_{mf} = \frac{u}{d_p \rho_f} \mathrm{Re}_{mf}$$

$$\mathrm{Re}_{mf} = \frac{\sqrt{b^2 + 4aAr} - b}{2a}$$

$$Ar = \frac{d_p^3 \rho_f (\rho_p - \rho_f) g}{u^3}$$

$$a = \frac{1.75}{\phi_s \varepsilon_{mf}^3}, b = \frac{150(1 - \varepsilon_{mf})}{\phi_s^2 \varepsilon_{mf}^3}$$

$$U_t = \left\{ \frac{4g^2(\rho_p - \rho_f)^2}{225 \rho_f u} \right\}^{\frac{1}{3}} d_p$$

$\mu$: Viscosity of fluid (Pa-s)
$d_p$: Average particle diameter of powder (m)
$\rho_f$: Density of fluid (kg/m$^3$)
$\mathrm{Re}_{mf}$: Reynolds number of powder in fluidized bed
Ar: Archimedes number
$\rho_p$: Density of powder (kg/m$^3$)
g: Gravitational acceleration (m/s$^2$)
$\phi_s$: Shape factor (1 in the case of genuine sphere)
$\varepsilon_{mf}$: Gap ratio in fluidized bed

Thus, the above described mixing calciner 112 in the cement-manufacturing facility effectively uses a heat source in the cement-manufacturing facility, and can recover $CO_2$ gas n generated in the mixing calciner 112 in a high concentration of nearly 100%.

Furthermore, the recovery method includes heating and calcining the cement material before calcination k in the mixing calciner 112, by using a heat medium t which has a larger particle diameter than that of the cement material before calcination k and has an extremely small specific surface area, accordingly suppresses the sticking or fusion-bonding among the heat media t or between the heat medium t and a furnace wall even when the heat medium t is heated to 1,000°C which is the calcination temperature or higher in the medium-heating furnace 115, and can suppress the occurrence of a coating trouble and the like.

In addition, the recovery method returns the high-temperature cement material k' after calcination, which has been sufficiently calcined in the mixing calciner 112, to the rotary kiln 1 from the return line 116, and accordingly can reduce the fuel necessary for firing a cement material in the rotary kiln 1. As a result, the cement manufacturing facility can use a rotary kiln 1 which has a shorter longitudinal dimension than that of a conventional one.

Industrial Applicability

According to the present invention, there can be provided a mixing calciner that can separate and recover $CO_2$ gas generated when a superheated calcined portion is mixed with a to-be-calcined cement material (i.e., cement material before calcination) and is calcined, in a higher concentration, by employing a fluidized-bed type or a spouted-bed type.

Reference Signs List

1 Rotary kiln (Cement kiln)
3 Preheater (First preheater)
10 Second preheater
10a Transfer pipe
12 Mixing calciner
12b Fluidizing or spouting means
13 Extraction line
15 Superheating furnace
16 Return line
25 Feed line
110 Second preheater
110a Transfer pipe
112 Mixing calciner
112a Recovery line
113 Extraction line
115 Medium-heating furnace
116 Return line
120 Feed line
125 Discharge line
126 Moving bed
127 Recovery line
128 Separating means
129 Charge line
k Cement material before calcination (uncalcined cement material)
k' Cement material after calcination (cement material which has been calcined)

**Claims**

1. A mixing calciner (12) which mixes a to-be-calcined cement material with a superheated calcined portion to cause a calcination reaction, wherein
the mixing calciner (12) is a fluidized-bed type or a spouted-bed type, and is provided with:

a plurality of feed lines (25) for feeding the to be-calcined cement material;

a fluidizing or spouting means (12b) in a bottom part of the mixing calciner for feeding air, in an early stage of operation, into the mixing calciner to fluidize or spouse the to-be-calcined cement material with air,
wherein the feed lines (25) for feeding the to be-calcined cement material are connected to different positions in a height direction of the mixing calciner.

**2.** The mixing calciner according to claim 1, wherein the fluidizing or spouting means has a nozzle or an air diffuser plate.

## Patentansprüche

**1.** Misch-Kalziniervorrichtung (12), welches ein zu kalzinierendes Zementmaterialmit einem überhitzten kalzinierten Teil mischt, um eine Kalzinierungsreaktion zu verursachen, worin
die Misch-Kalziniervorrichtung (12) vom Fließbett-Typ oder vom Sprudelbett-Typ ist und versehen ist mit:

einer Mehrzahl von Zuführleitungen (25) zum Zuführen des zu kalzinierenden Zementmaterials;
einem Fluidisierungs- oder Sprudelmittel (12b) in einem Bodenbereich der Misch-Kalziniervorrichtung zum Zuführen von Luft zu einem frühen Stadium des Betriebs in die Misch-Kalziniervorrichtung, um das zu kalzinierende Zementmaterial mit Luft zu fluidisieren oder zu versprudeln,
worin die Zuführleitungen (25) zum Zuführen des zu kalzinierenden Zementmaterials an verschiedenen Positionen in Höhenrichtung der Misch-Kalziniervorrichtung verbunden sind.

**2.** Misch-Kalziniervorrichtung gemäß Anspruch 1, worin das Fluidisierungs- oder Sprudelmittel eine Düse oder eine Luft-Diffusorplatte aufweist.

## Revendications

**1.** Dispositif de mélange et calcination (12) qui mélange un matériau de ciment à calciner avec une partie calcinée surchauffée pour provoquer une réaction de calcination, dans lequel
le dispositif de mélange et calcination (12) est de type à lit fluidisé ou de type à lit projeté, et est doté de :

une pluralité de lignes de fourniture (25) pour fournir le matériau de ciment à calciner;
un moyen de fluidisation ou de projection (12b) dans une partie inférieure du dispositif de mélange et calcination pour fournir de l'air, dans une phase précoce de fonctionnement, dans le dispositif de mélange et calcination pour fluidiser ou projeter le matériau de ciment à calciner avec de l'air,
dans lequel les lignes de fourniture (25) pour fournir le matériau de ciment à calciner sont raccordées à différentes positions dans un sens de la hauteur du dispositif de mélange et calcination.

**2.** Dispositif de mélange et calcination selon la revendication 1, dans lequel le moyen de fluidisation ou de projection a une buse ou une plaque de diffuseur d'air.

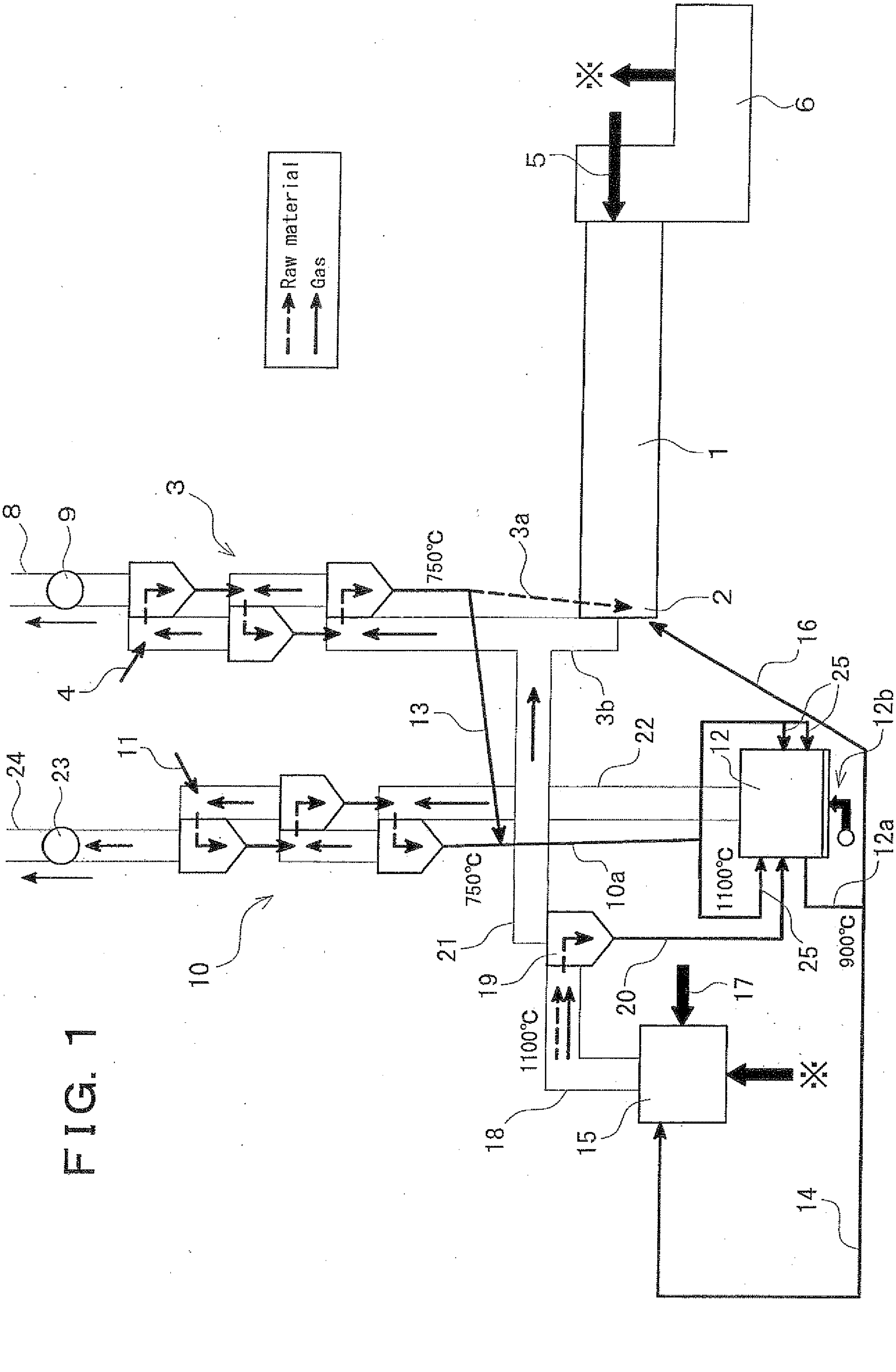


FIG. 1

FIG. 2

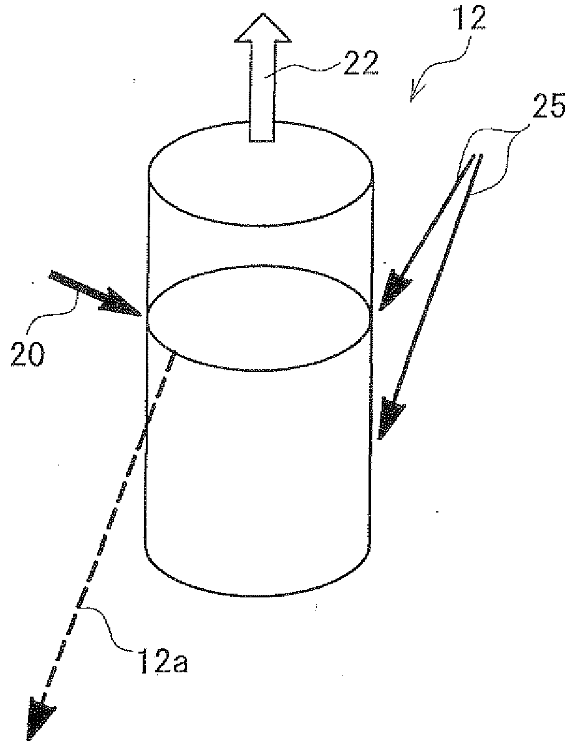


FIG. 3

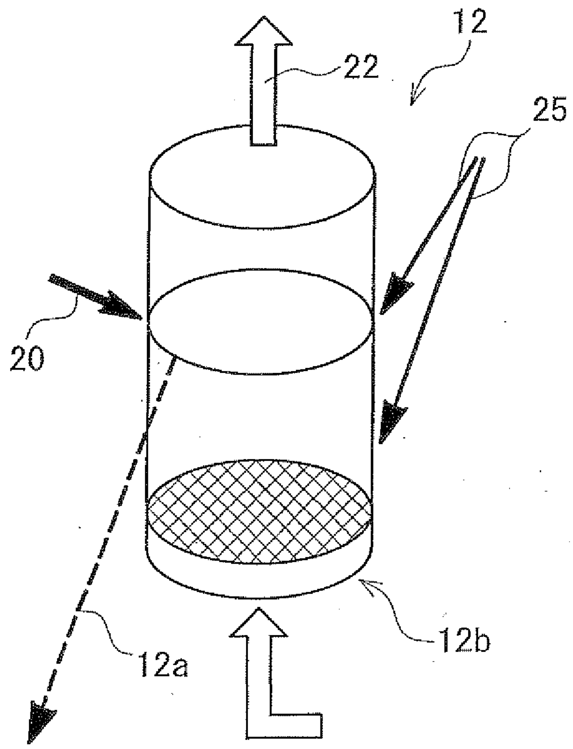

FIG. 4

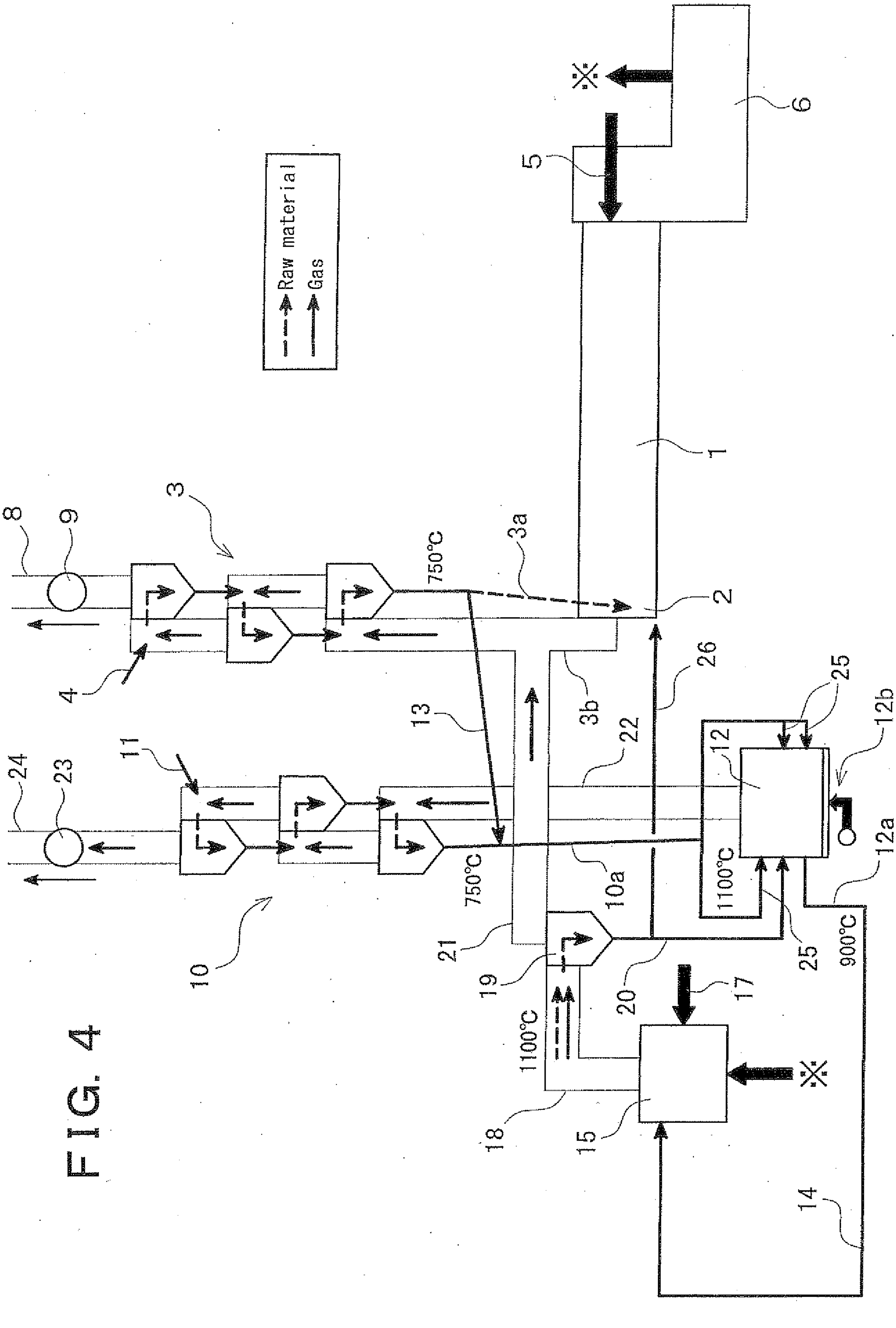
Raw material
Gas
750°C
750°C
1100°C
1100°C
900°C
1
2
3
3a
3b
4
5
6
8
9
10
10a
11
12
12a
12b
13
14
15
17
18
19
20
21
22
23
24
25
26

FIG. 5

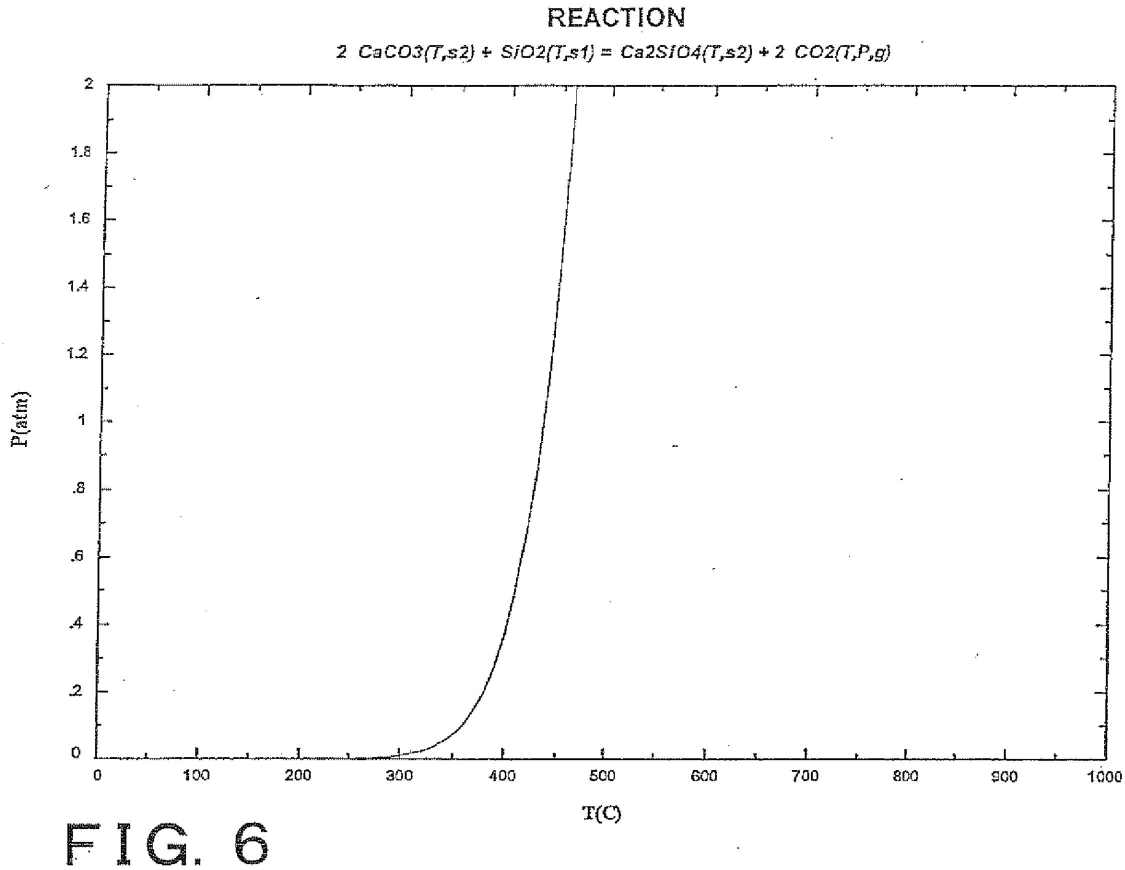
REACTION
2 CaCO3(T,s2) + SiO2(T,s1) = Ca2SiO4(T,s2) + 2 CO2(T,P,g)
P(atm)
T(C)
0
.2
.4
.6
.8
1
1.2
1.4
1.6
1.8
2
0
100
200
300
400
500
600
700
800
900
1000

FIG. 6

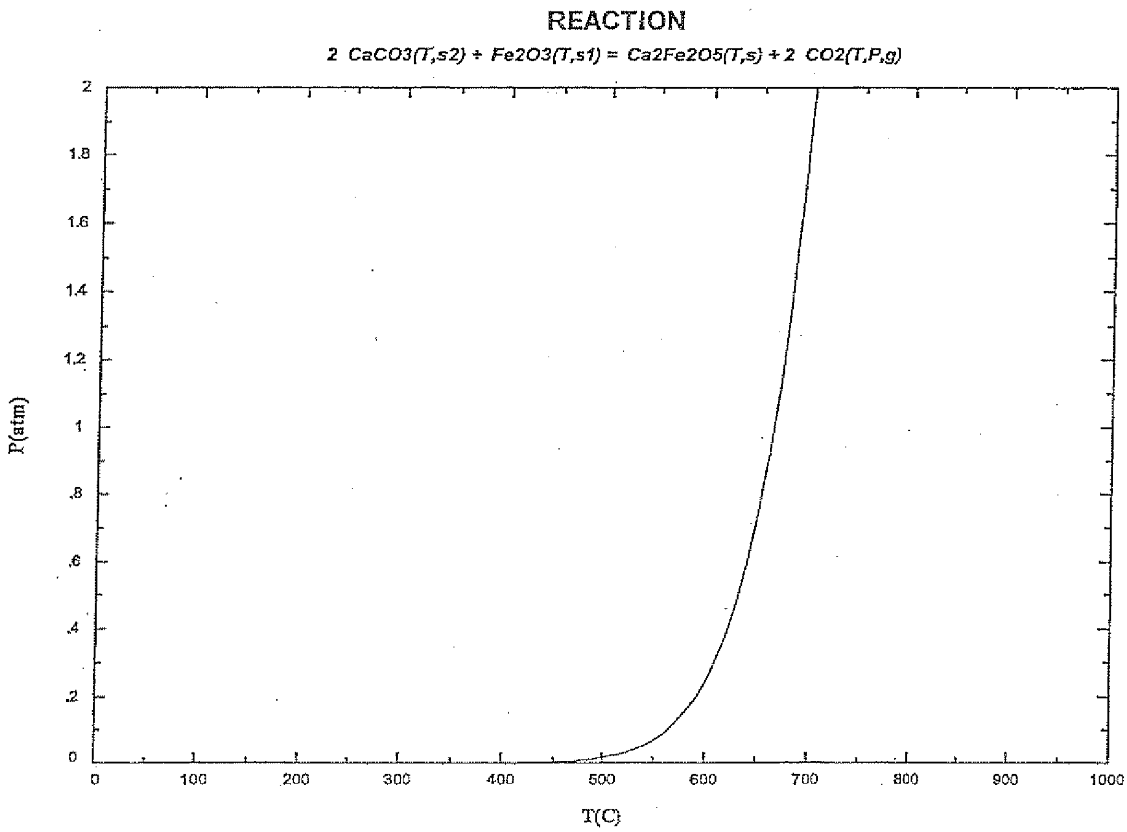
REACTION
2 CaCO3(T,s2) + Fe2O3(T,s1) = Ca2Fe2O5(T,s) + 2 CO2(T,P,g)
P(atm)
T(C)
0
.2
.4
.6
.8
1
1.2
1.4
1.6
1.8
2
0
100
200
300
400
500
600
700
800
900
1000

FIG. 7

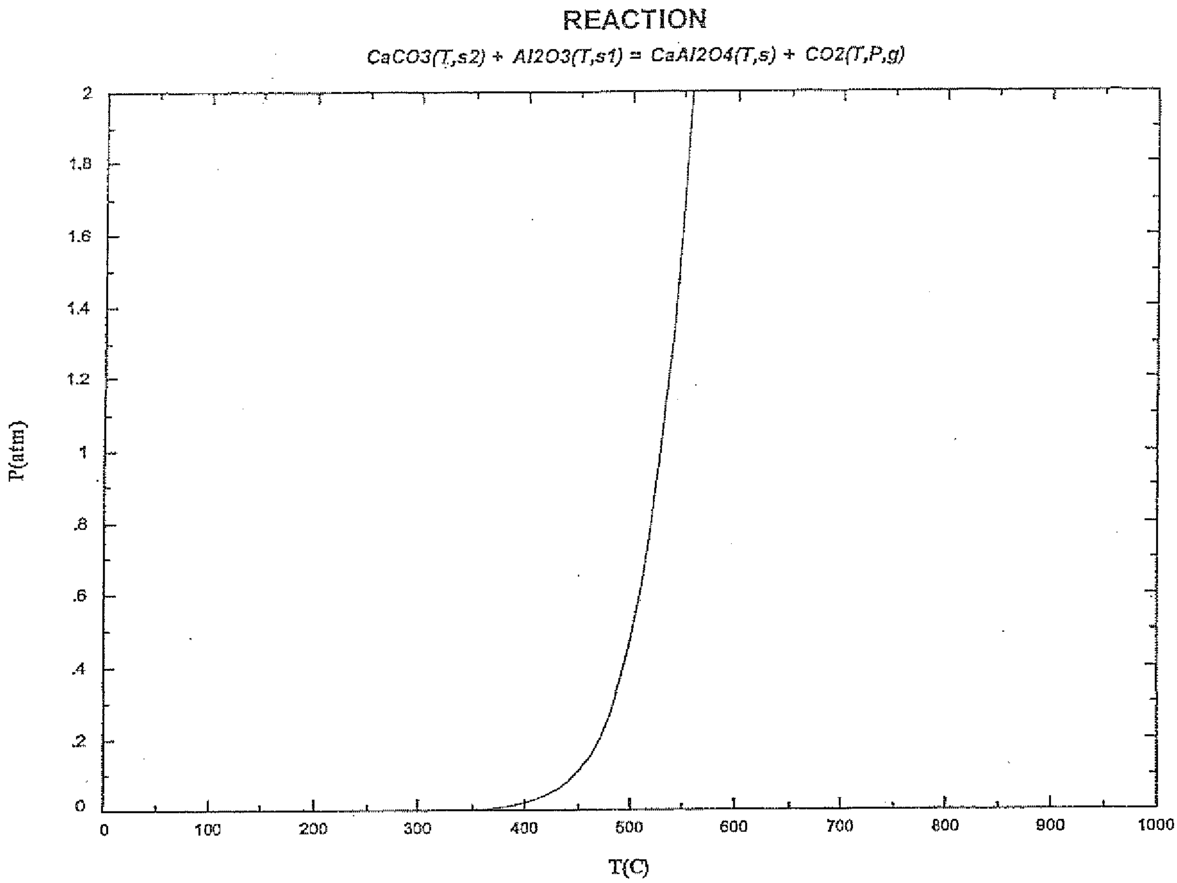
REACTION
CaCO3(T,s2) + Al2O3(T,s1) = CaAl2O4(T,s) + CO2(T,P,g)
P(atm)
2
1.8
1.6
1.4
1.2
1
.8
.6
.4
.2
0
0
100
200
300
400
500
600
700
800
900
1000
T(C)

FIG. 8

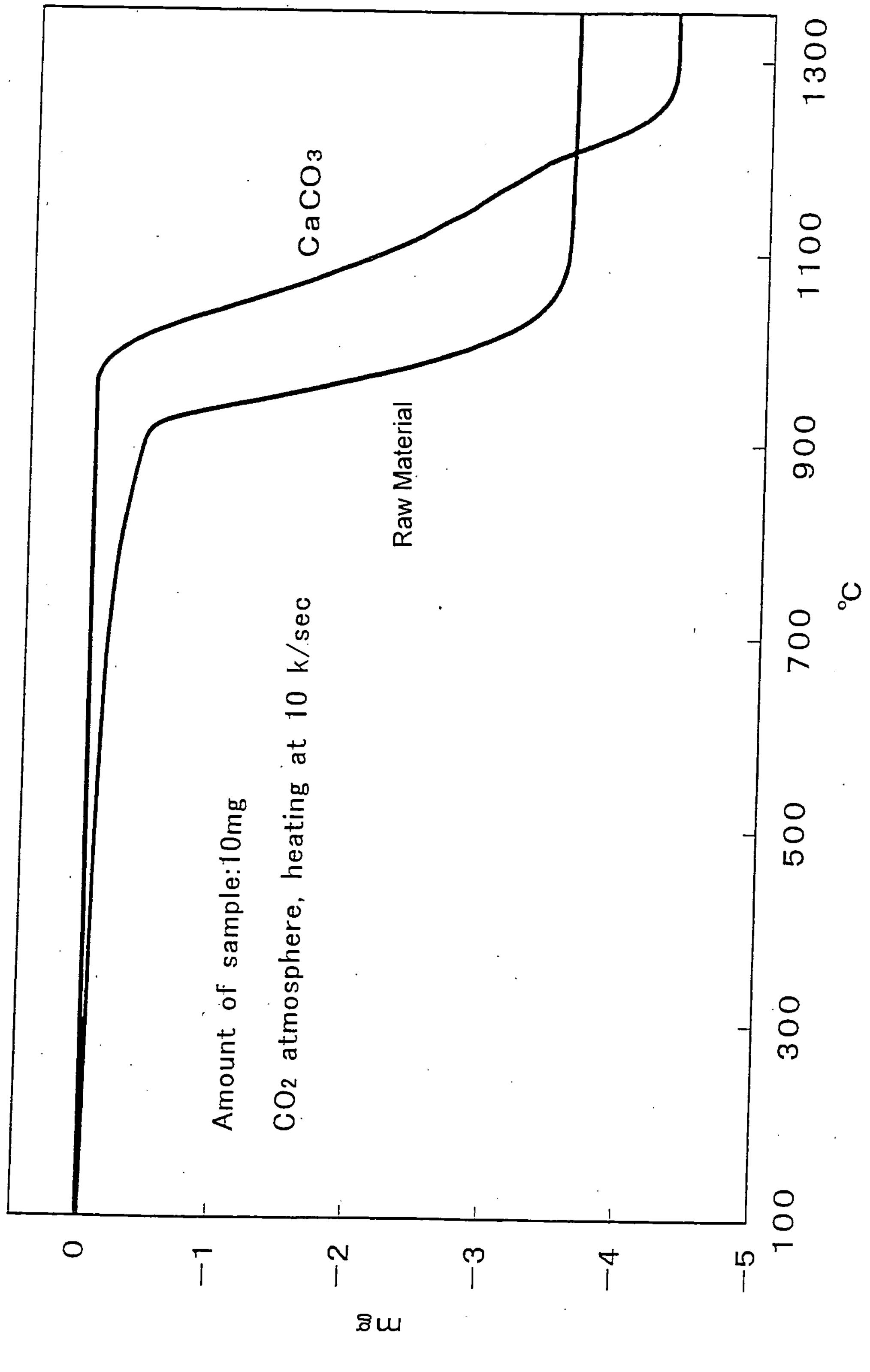
Amount of sample:10mg
$CO_2$ atmosphere, heating at 10 k/sec
$CaCO_3$
Raw Material
0
−1
−2
−3
−4
−5
mg
100
300
500
700
900
1100
1300
℃

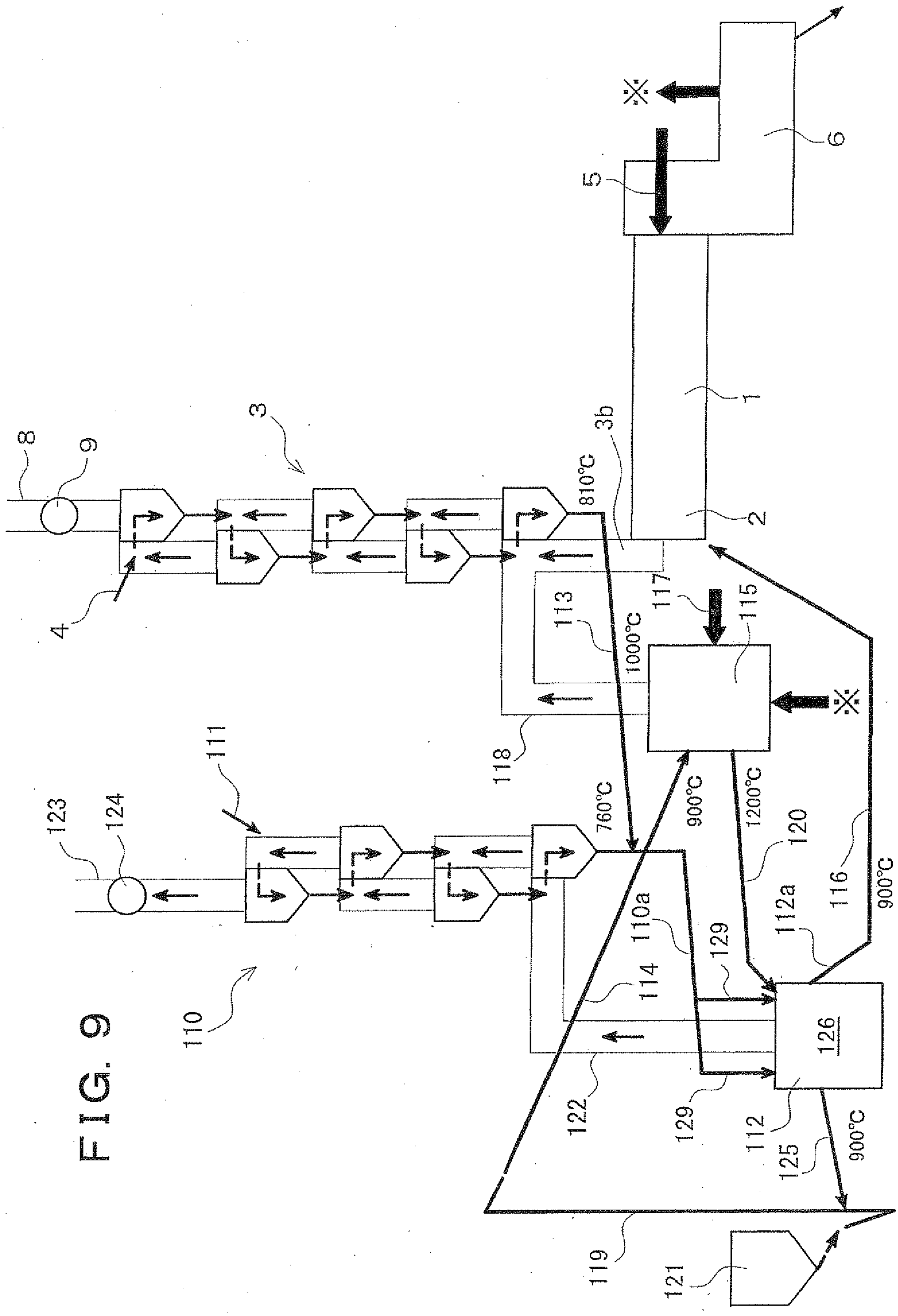
1
2
3
3b
4
5
6
8
9
110
110a
111
112
112a
113
114
115
116
117
118
119
120
121
122
123
124
125
126
129
129
810°C
1000°C
760°C
900°C
900°C
900°C
1200°C
※
※

FIG. 9

FIG. 10

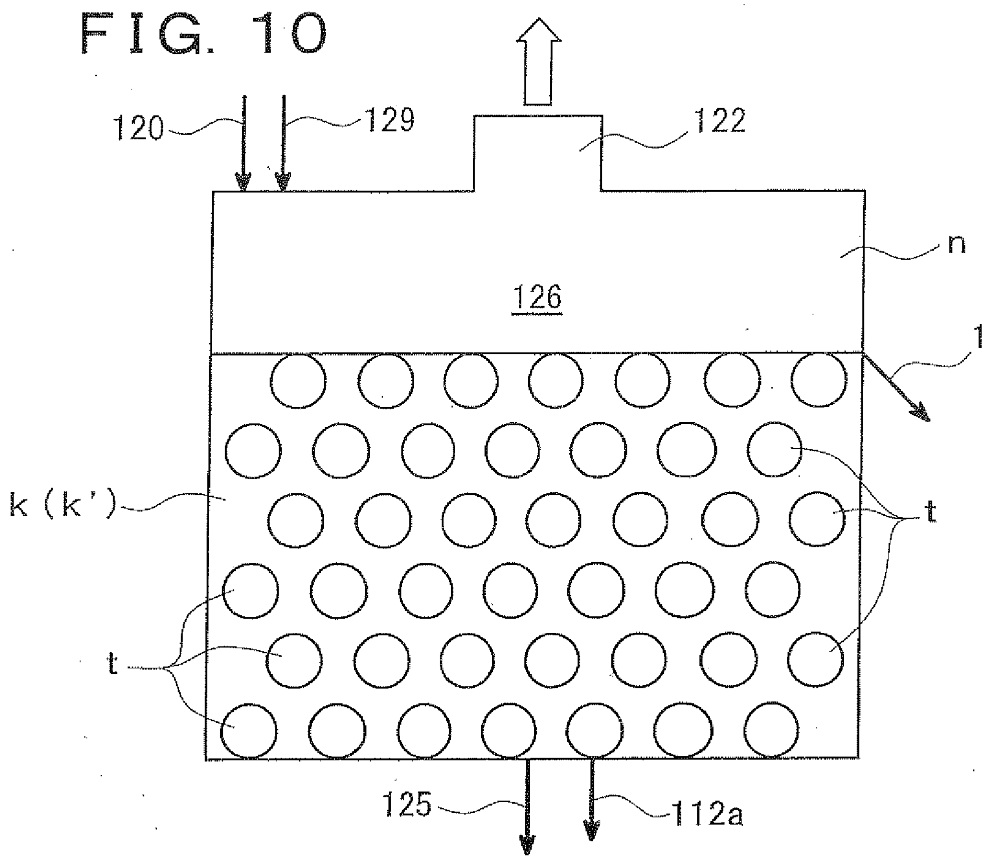
120
129
122
n
126
112a
k (k')
t
t
125
112a

FIG. 11

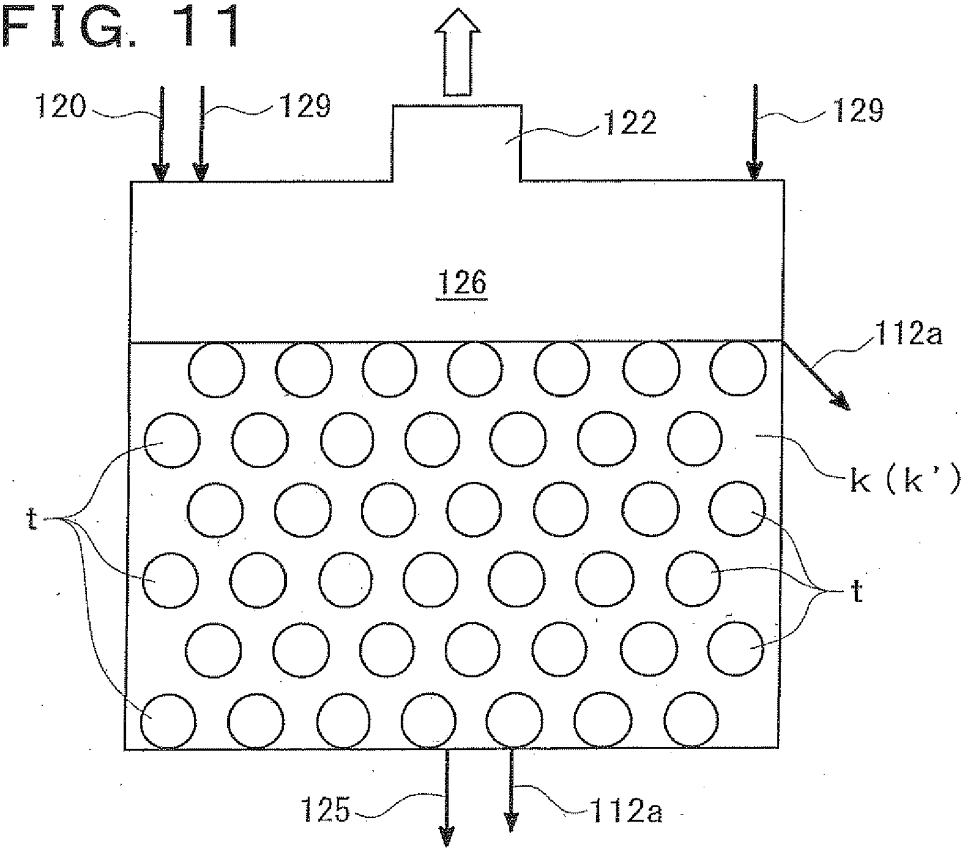
120
129
122
129
126
112a
k (k')
t
t
125
112a

FIG. 12

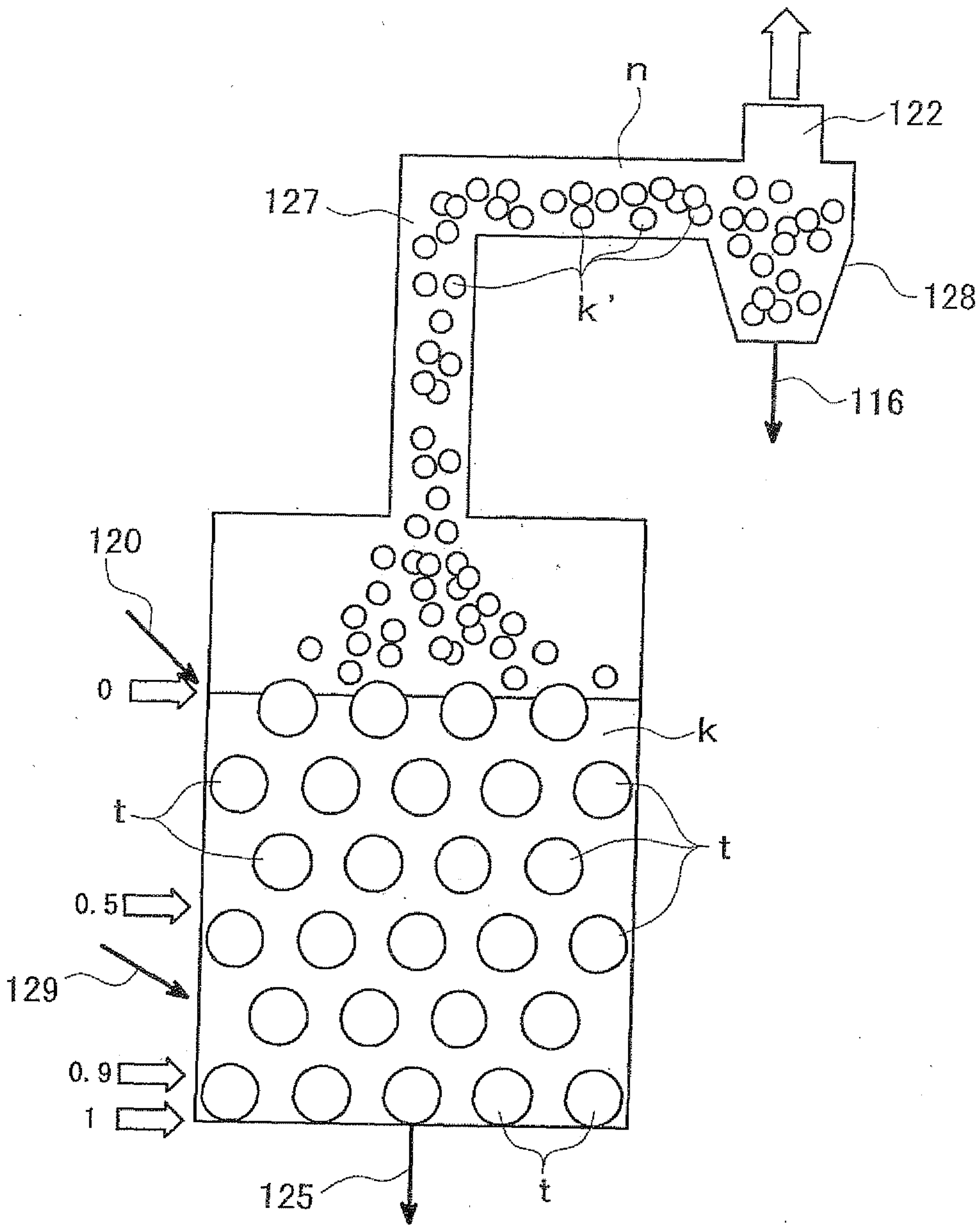

FIG. 13

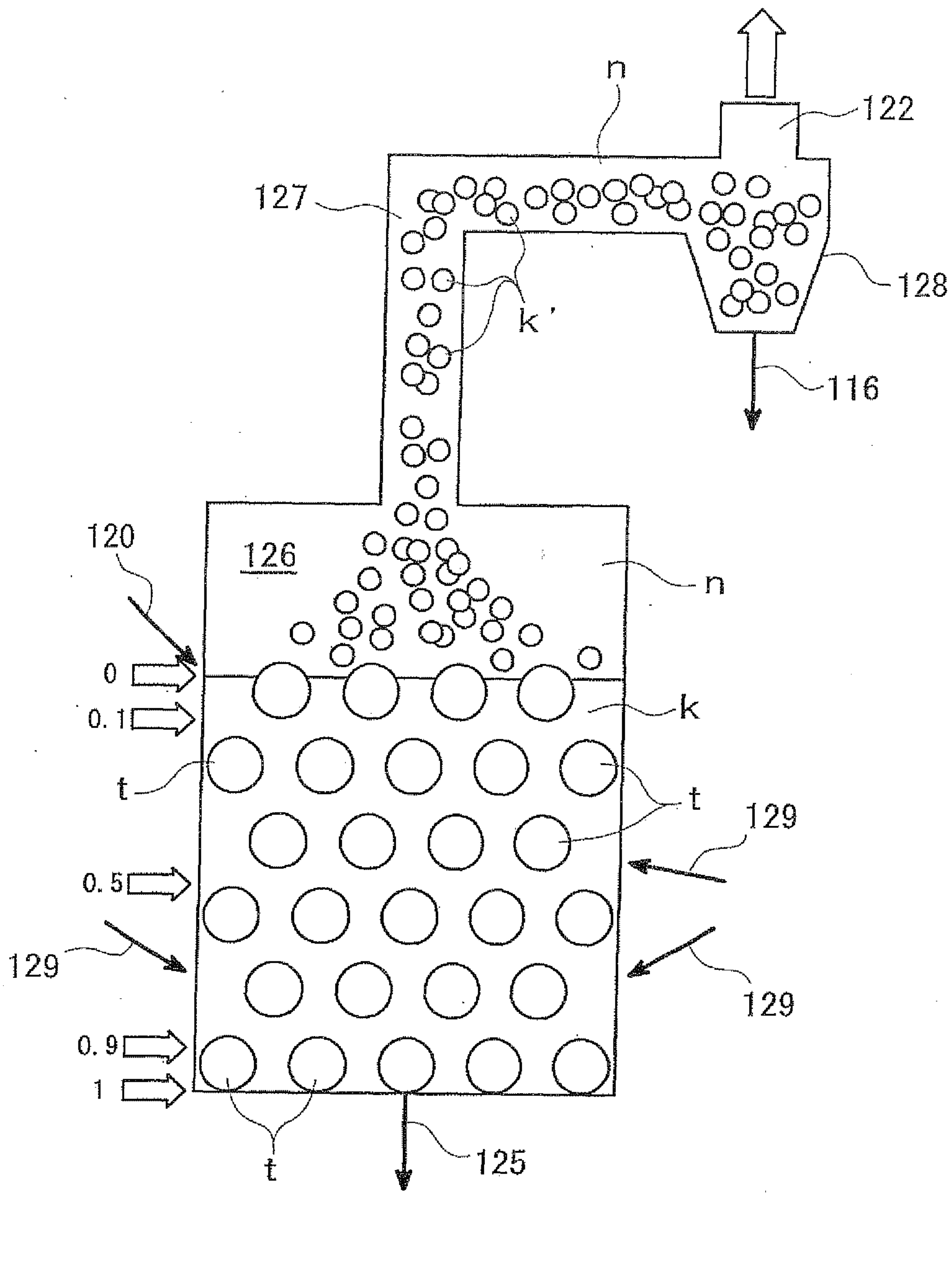

FIG. 14

REACTION

2 CaCO3(T,s2) + SiO2(T,s1) = Ca2SiO4(T,s2) + 2 CO2(T,P,g)

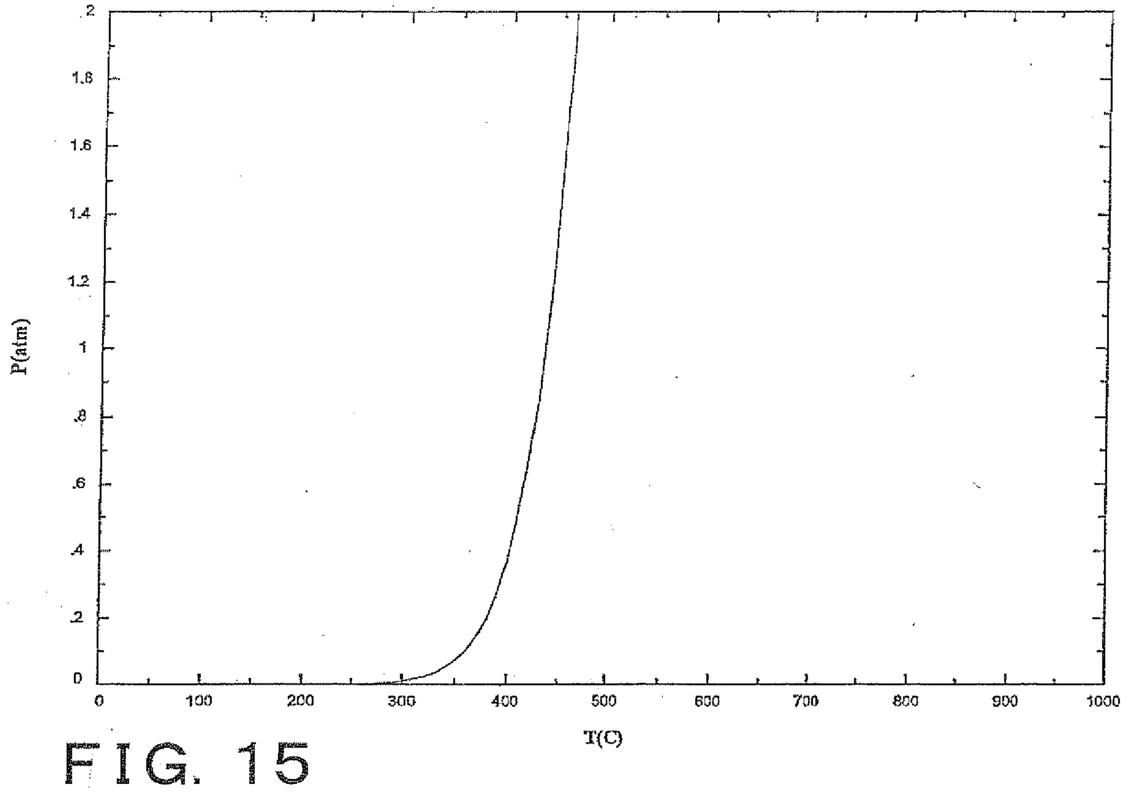


FIG. 15

REACTION

2 CaCO3(T,s2) + Fe2O3(T,s1) = Ca2Fe2O5(T,s) + 2 CO2(T,P,g)

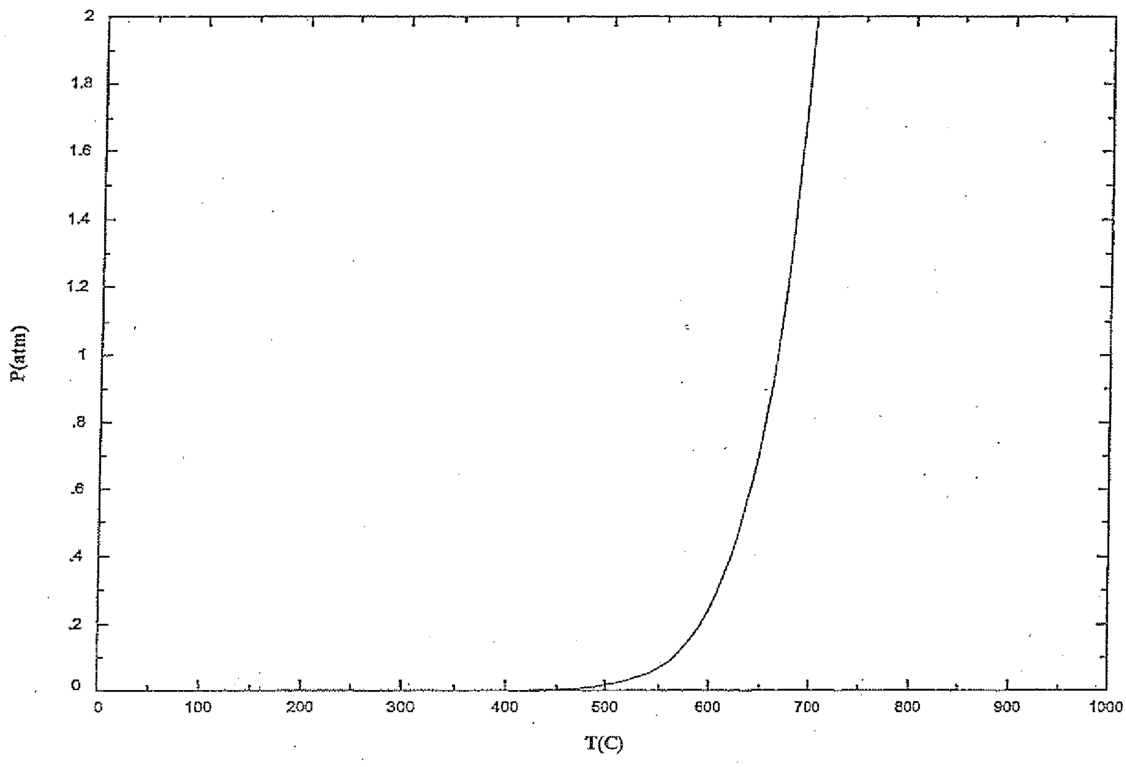

FIG. 16

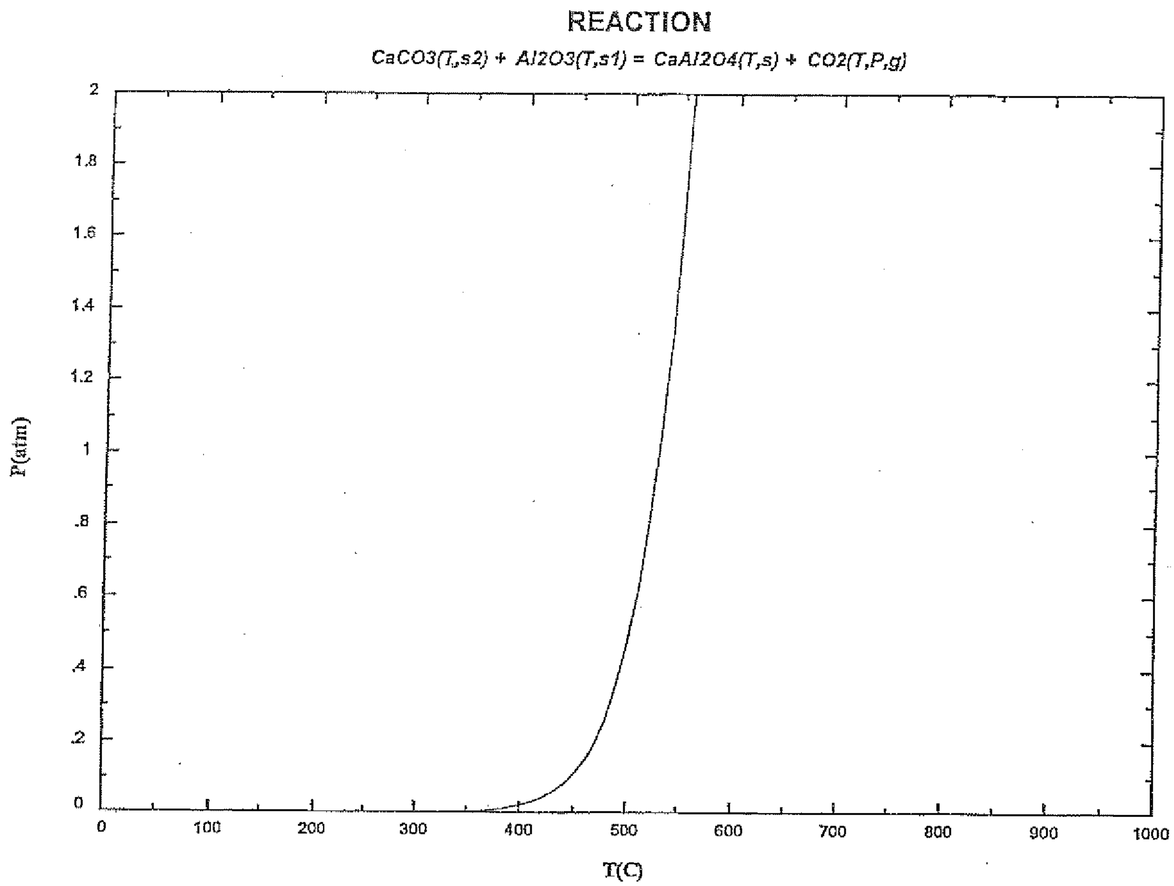
REACTION
CaCO3(T,s2) + Al2O3(T,s1) = CaAl2O4(T,s) + CO2(T,P,g)
P(atm)
2
1.8
1.6
1.4
1.2
1
.8
.6
.4
.2
0
0
100
200
300
400
500
600
700
800
900
1000
T(C)

FIG. 17

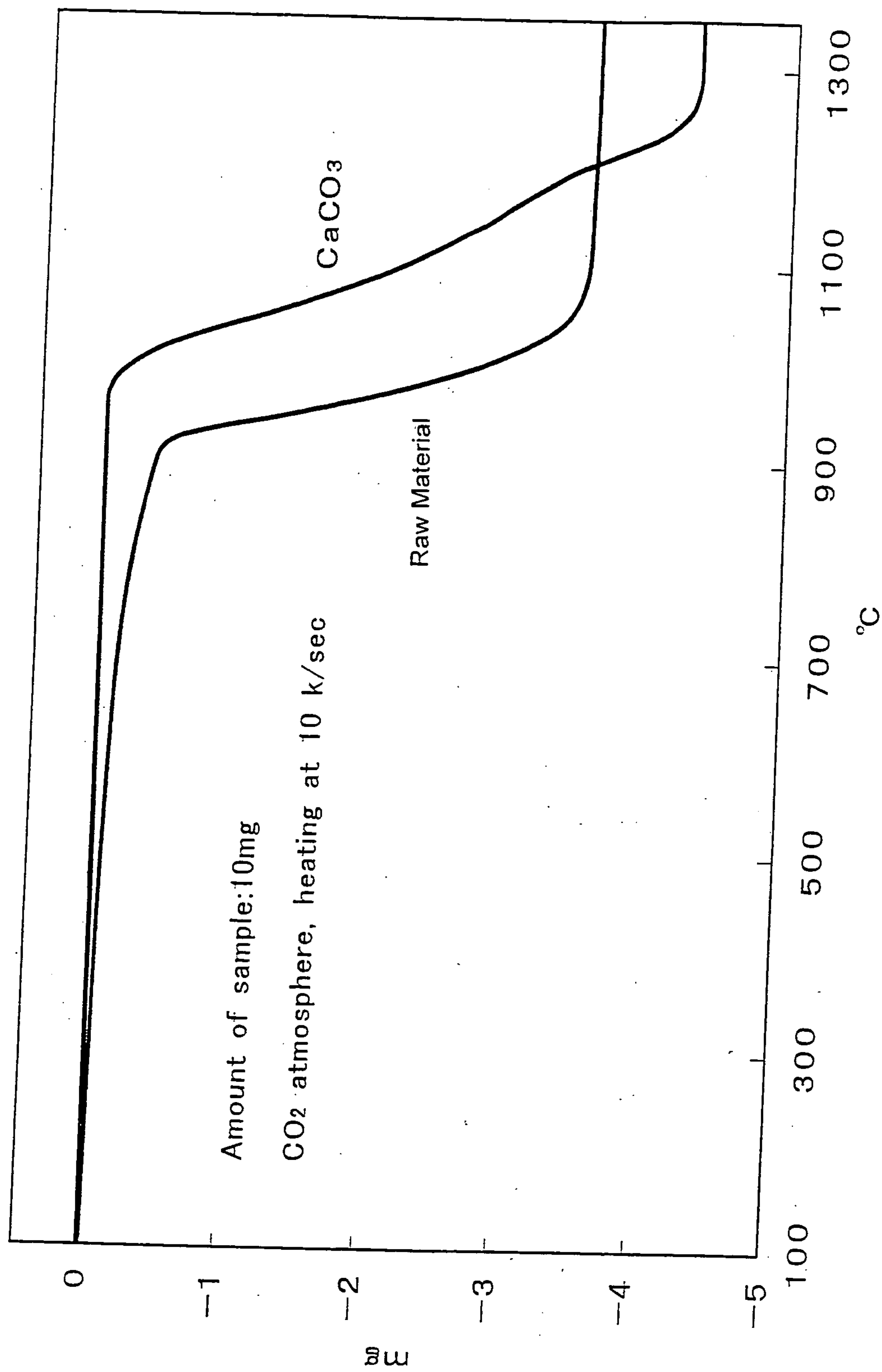

Amount of sample:10mg
$CO_2$ atmosphere, heating at 10 k/sec
CaCO3
Raw Material
0
−1
−2
−3
−4
−5
mg
100
300
500
700
900
1100
1300
°C

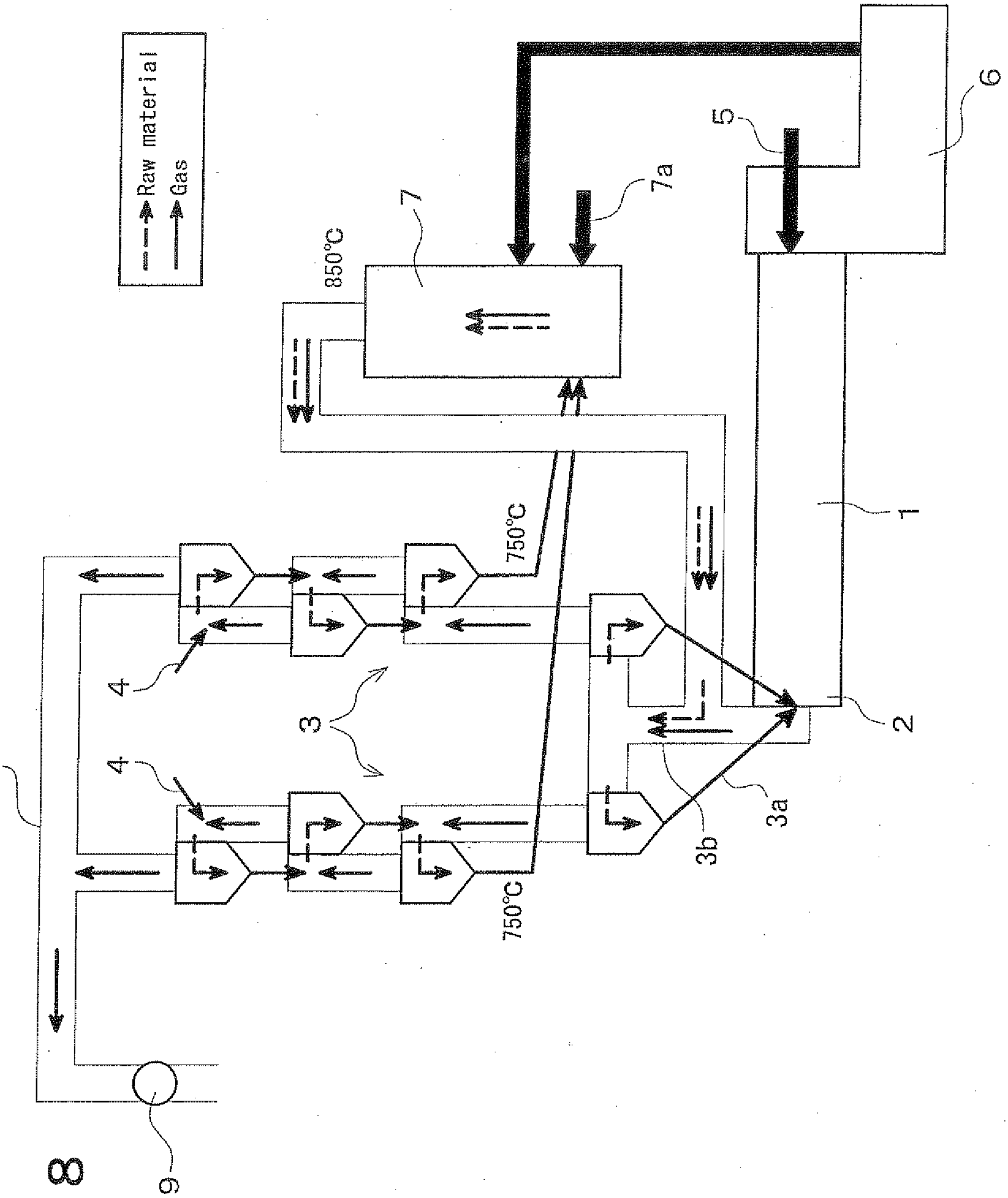


FIG. 18

FIG. 19

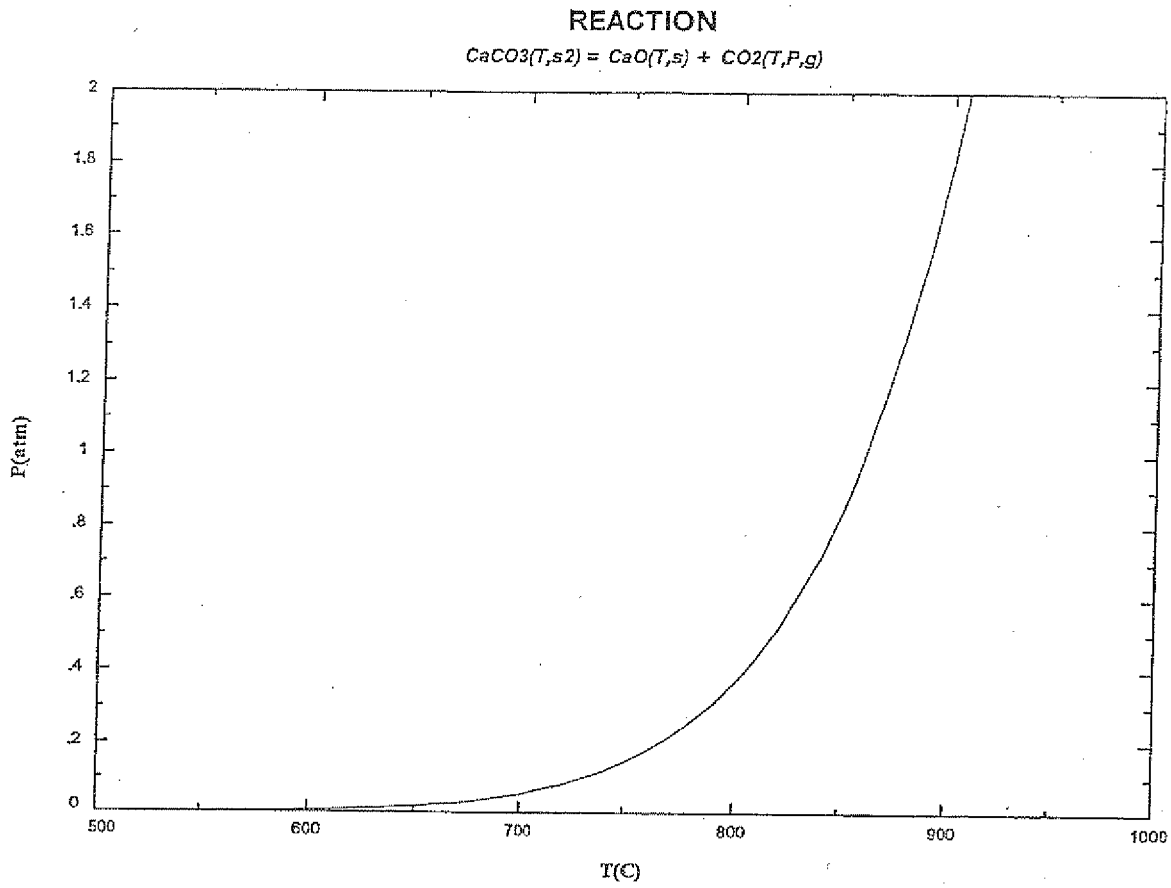
REACTION
CaCO3(T,s2) = CaO(T,s) + CO2(T,P,g)
P(atm)
2
1.8
1.6
1.4
1.2
1
.8
.6
.4
.2
0
500
600
700
800
900
1000
T(C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 57067013 A
- WO 2009136485 A1